# EUROPEAN PATENT APPLICATION

(11) **EP 3 301 984 A1**
(43) Date of publication of application: **04.04.2018**
(21) Application number: 15895888.4
(22) Date of filing: 23.06.2015
(51) Int. Cl.: H04W 72/04

(54) **DATA TRANSMISSION POWER CONTROL METHOD AND DEVICE**

(71) Applicant: Huawei Technologies Co., Ltd., Longgang Shenzhen, Guangdong 518129 (CN)
(72) Inventor: XU, Xiuqiang, Shenzhen Guangdong 518129 (CN); LIU, Yalin, Shenzhen Guangdong 518129 (CN); CHEN, Yan, Shenzhen Guangdong 518129 (CN)
(74) Representative: Gill Jennings & Every LLP
(86) International application number: PCT/CN2015/082018
(87) International publication number: WO 2016/205988

(57) **Abstract**

Embodiments of the present invention provide a data transmission power control method and apparatus. The method includes: determining configuration information of a first contention transmission unit, where the configuration information of the first contention transmission unit includes power control information, a contention transmission unit is a transmission resource that includes or a transmission resource that includes at least a time domain, a frequency domain, and a code domain, and the power control information of the first contention transmission unit is used to control power used when a terminal device sends uplink data by using the first contention transmission unit; and sending the configuration information of the first contention transmission unit to the terminal. In the embodiments of the present invention, uplink transmission power can be controlled, and interference between users in a cell and interference between neighboring cells can be reduced by further controlling uplink transmission power.

## Description

### TECHNICAL FIELD

The present invention relates to the communications field, and more specifically, to a data transmission power control method and apparatus.

### BACKGROUND

In a Long Term Evolution (Long Term Evolution, LTE) system, when uplink data needs to be transmitted, user equipment (User Equipment, UE) uses an uplink scheduling request (Scheduling Request, SR) mechanism. The UE sends an uplink scheduling request to a base station, to notify the base station that the UE needs an uplink resource to transmit data. After receiving the scheduling request of the UE, the base station allocates some resources to the UE, and the UE transmits data on these allocated resources. However, such a mechanism causes a great many signaling overheads.

To resolve the foregoing problem, an unauthorized (grant free) uplink technical solution has been provided. Grant free means that in a public land mobile network (Public Land Mobile Network, PLMN), UE does not need to request, in a scheduling request manner, a base station to allocate a resource to transmit data. According to different features of the transmitted data, for example, a requirement on a transmission delay or reliability, a Grant Free user may directly transmit a packet on a contention transmission resource (Contention Transmission Unit, CTU) in a grant free transmission manner.

In an existing LTE system, user equipment needs to establish a Radio Resource Control (Radio Resource Control, RRC) connection to a wireless communications network during communication, and a mobility management entity (Mobility Management Entity, MME) implements certification and authentication on the user equipment according to information about the user equipment that is recorded in a home location register (Home Location Register, HLR). The user equipment, a base station, a serving gateway (Serving Gateway, S-GW), and a public data network (Public Data Network, PDN) gateway (PDN Gateway, P-GW) need to establish bearer channels between each other, so that service data streams are transmitted on the established bearer channels. In addition, the user equipment and a network device further need to establish a protocol stack context, including a Packet Data Convergence Protocol (Packet Data Convergence Protocol, PDCP) entity, a Radio Link Control (Radio Link Control, RLC) entity, a Medium Access Control (Medium Access Control, MAC) entity, a physical layer (Physical layer, PHY) entity, or another entity. To ensure integrity and security of data transmission, the user equipment performs integrity protection (Integrity Protection) and ciphering process (Ciphering Process) in the PDCP entity.

In a grant free (Grant Free, GF) transmission scenario, the user equipment may be in idle mode or in connected mode. When in connected mode, the user equipment and the network device may maintain a context resource required by air interface transmission, that is, the PDCP entity, the RLC entity, the MAC entity, or the PHY entity, thereby ensuring integrity and security of data transmission. In this way, redundant protocol stack additional information decreases transmission efficiency. However, in idle mode, the user equipment does not need to establish an RRC connection to a network side, and may directly transmit a packet on a contention transmission resource (Contention Transmission Unit, CTU) in a grant free transmission manner. This technical solution is simple and effective. However, compared with authorized transmission, unauthorized transmission is highly uncertain, and different terminals may perform uplink transmission by using a same resource. As a result, interference between users in a cell and interference between neighboring cells are more serious than those in the authorized transmission. Therefore, how to reduce interference is a problem that needs to be resolved urgently.

### SUMMARY

Embodiments of the present invention provide a data transmission power control method and apparatus, so that uplink transmission power can be controlled.

According to one aspect, a data transmission power control method is provided, including:
determining configuration information of a first contention transmission unit, where the configuration information of a first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal device sends uplink data by using the first contention transmission unit; and
sending the configuration information of the first contention transmission unit to the terminal.

According to another aspect, a data transmission power control method is provided, including:
receiving configuration information of the first contention transmission unit that is sent by a network device, where the configuration information of the first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal sends uplink data by using the first contention transmission unit;
determining, according to the power control information of the first contention transmission unit, power used when uplink data is sent by using a transmission resource of the first contention transmission unit; and
sending the uplink data on the transmission resource of the first contention transmission unit by using the determined power.

According to another aspect, a data transmission power control apparatus is provided, including:
a determining module, configured to determine configuration information of a first contention transmission unit, where the configuration information of the first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal sends uplink data by using the first contention transmission unit; and
a sending module, configured to send the configuration information of the first contention transmission unit to the terminal device.

According to another aspect, a data transmission power control apparatus is provided, including:
a receiving module, configured to receive configuration information of a first contention transmission unit that is sent by a network device, where the configuration information of the first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal sends uplink data by using the first contention transmission unit;
a determining module, configured to determine, according to the power control information of the first contention transmission unit, power used when uplink data is sent by using a transmission resource of the first contention transmission unit; and
a sending module, configured to send the uplink data on the transmission resource of the first contention transmission unit by using the power determined by the determining module.

According to another aspect, a data transmission power control apparatus is provided, including:
a processor, a transmitter, and a memory, where the memory is configured to store program code, and the processor is configured to invoke the program code stored in the memory, to perform the following operations:
   determining configuration information of a first contention transmission unit, where the configuration information of a first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal device sends uplink data by using the first contention transmission unit; and
   sending the configuration information of the first contention transmission unit to the terminal device by using the transmitter.

According to another aspect, a data transmission power control apparatus is provided, including:
a processor, a transmitter, a receiver, and a memory, where the memory is configured to store program code, and the processor is configured to invoke the program code stored in the memory to perform the following operations:
   receiving, by using the receiver, configuration information of a first contention transmission unit that is sent by a network device, where the configuration information of the first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal sends uplink data by using the first contention transmission unit;
   determining, according to the power control information of the first contention transmission unit, power used when uplink data is sent by using a transmission resource of the first contention transmission unit; and
   sending the uplink data on the transmission resource of the first contention transmission unit by using the transmitter and by using the determined power.

Therefore, because configuration information of a contention transmission unit carries power control information for the contention transmission unit, a terminal can determine, according to the power control information in the configuration information, power when uplink transmission is performed by using the contention transmission unit, so that uplink transmission power can be controlled, and interference between users in a cell and interference between neighboring cells can be reduced by further controlling uplink transmission power.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a communications system to which embodiments of the present invention are applied;
FIG. 2 is a schematic architectural diagram of a communications system 200 according to another embodiment of the present invention;
FIG. 3 is a schematic diagram of a CTU resource definition according to an embodiment of the present invention;
FIG. 4 is a schematic flowchart of a data transmission power control method according to an embodiment of the present invention;
FIG. 5 is a diagram of an application scenario according to another embodiment of the present invention;
FIG. 6 is a diagram of an application scenario according to another embodiment of the present invention;
FIG. 7 shows a method for delivering configuration information of a contention transmission unit according to an embodiment of the present invention;
FIG. 8 shows a method for delivering configuration information of a contention transmission unit according to an embodiment of the present invention;
FIG. 9 is a schematic flowchart of a data transmission power control method according to an embodiment of the present invention;
FIG. 10 is a schematic flowchart of a data transmission power control method according to an embodiment of the present invention;
FIG. 11 is a schematic flowchart of a data transmission power control method according to an embodiment of the present invention;
FIG. 12 is a schematic flowchart of a data transmission power control method according to an embodiment of the present invention; and
FIG. 13 is a schematic flowchart of a data transmission power control method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

It should be understood that, the technical solutions of the embodiments of the present invention may be applied to various communications systems, such as: a Global System for Mobile Communications (Global System of Mobile Communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), and a future 5G communications system.

The embodiments are described with reference to a terminal device in the present invention. A terminal device may also be referred to as user equipment (User Equipment, UE for short), an access terminal, a subscriber unit, a subscriber station, a mobile station, a mobile, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, a terminal device in a future 5G network, a terminal device in a future evolved PLMN network, or the like.

The embodiments are described with reference to a network device in the present invention. The network device may be a device used to communicate with a terminal device. For example, the network device may be a base transceiver station (Base Transceiver Station, "BTS" for short) in a GSM system or CDMA, or a NodeB (NodeB, "NB" for short) in a WCDMA system, or an evolved Node B (Evolutional Node B, "eNB" or "eNodeB" for short) in an LTE system. Alternatively, the network device may be a relay station, an access point, an in-vehicle device, a wearable device, a core network device in a future 5G network, a network device in a future evolved PLMN network, or the like.

In addition, aspects or features of the present invention may be implemented as a method, an apparatus or a product that uses standard programming and/or engineering technologies. The term "product" used in this application covers a computer program that can be accessed from any computer readable component, carrier or medium. For example, the computer-readable medium may include but is not limited to: a magnetic storage component (for example, a hard disk, a floppy disk or a magnetic tape), an optical disc (for example, a CD (Compact Disk, compact disk), a DVD (Digital Versatile Disk, digital versatile disk), a smart card and a flash memory component (for example, EPROM (Erasable Programmable Read-Only Memory, erasable programmable read-only memory), a card, a stick, or a key drive). In addition, various storage media described in this specification may indicate one or more devices and/or other machine-readable media that is used to store information. The term "machine readable media" may include but is not limited to a radio channel, and various other media that can store, contain and/or carry an instruction and/or data.

An existing cellular communications system, such as a GSM system, a WCDMA system, or an LTE system, mainly supports voice communication and data communication. Usually, a conventional base station supports a limited quantity of connections, and this is easy to implement.

A next generation mobile communications system is to support both conventional communication and machine-to-machine (Machine to Machine, "M2M" for short) communication, or referred to as machine type communication (Machine Type Communication, "MTC" for short) communication. It is predicted that, by 2020, there will be 50 billion to 100 billion MTC devices connected to a network, and this is much greater than a current quantity of connections. Because service types of M2M services differ greatly, requirements on a network are much different. Generally, there are the following requirements: (I) reliable transmission, but insensitive to a delay; (II) low delay, but highly reliable transmission.

A service that requires reliable transmission but is insensitive to a delay is relatively easy to be processed. However, for a service that requires a low delay but highly reliable transmission, for example, a V2V (English full name: Vehicle to Vehicle) service, transmission is required to be both short in delay and reliable. Unreliable transmission causes retransmission, resulting in an extremely great transmission delay. This cannot meet the requirement.

Because of a large quantity of connections, a future wireless communications system and an existing communications system are radically different. Because of a large quantity of connections, more resources need to be consumed for connecting to a terminal device and more resources need to be consumed for transmitting scheduling signaling related to data transmission of the terminal device.

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

It should be understood that, the technical solutions of the embodiments of the present invention may be applied to various communications systems, such as: a Global System for Mobile Communications (Global System of Mobile Communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), and a future 5G communications system.

The embodiments are described with reference to a terminal device in the present invention. A terminal device may also be referred to as user equipment (User Equipment, UE for short), an access terminal, a subscriber unit, a subscriber station, a mobile station, a mobile, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, a terminal device in a future 5G network, a terminal device in a future evolved PLMN network, or the like.

The embodiments are described with reference to a network device in the present invention. The network device may be a device used to communicate with a terminal device. For example, the network device may be a base transceiver station (Base Transceiver Station, "BTS" for short) in a GSM system or CDMA, or a NodeB (NodeB, "NB" for short) in a WCDMA system, or an evolved Node B (Evolutional Node B, "eNB" or "eNodeB" for short) in an LTE system. Alternatively, the network device may be a relay station, an access point, an in-vehicle device, a wearable device, a network side device in a future 5G network, a network device in a future evolved PLMN network, or the like.

In addition, aspects or features of the present invention may be implemented as a method, an apparatus or a product that uses standard programming and/or engineering technologies. The term "product" used in this application covers a computer program that can be accessed from any computer readable component, carrier or medium. For example, the computer-readable medium may include but is not limited to: a magnetic storage component (for example, a hard disk, a floppy disk or a magnetic tape), an optical disc (for example, a CD (Compact Disk, compact disk), a DVD (Digital Versatile Disk, digital versatile disk), a smart card and a flash memory component (for example, EPROM (Erasable Programmable Read-Only Memory, erasable programmable read-only memory), a card, a stick, or a key drive). In addition, various storage media described in this specification may indicate one or more devices and/or other machine-readable media that is used to store information. The term "machine readable media" may include but is not limited to a radio channel, and various other media that can store, contain and/or carry an instruction and/or data.

An existing cellular communications system, such as a GSM system, a WCDMA system, or an LTE system, mainly supports voice communication and data communication. Usually, a conventional base station supports a limited quantity of connections, and this is easy to implement.

A next generation mobile communications system is to support both conventional communication and machine-to-machine (Machine to Machine, "M2M" for short) communication, or referred to as machine type communication (Machine Type Communication, "MTC" for short) communication. It is predicted that, by 2020, there will be 50 billion to 100 billion MTC devices connected to a network, and this is much greater than a current quantity of connections. Because service types of M2M services differ greatly, requirements on a network are much different. Generally, there are the following requirements: (I) reliable transmission, but insensitive to a delay; (II) low delay, but highly reliable transmission.

A service that requires reliable transmission but is insensitive to a delay is relatively easy to be processed. However, for a service that requires a low delay but highly reliable transmission, for example, a V2V (English full name: Vehicle to Vehicle) service, transmission is required to be both short in delay and reliable. Unreliable transmission causes retransmission, resulting in an extremely great transmission delay. This cannot meet the requirement.

Because of a large quantity of connections, a future wireless communications system and an existing communications system are much different. Because of a large quantity of connections, more resources need to be consumed for connecting to UE and more resources need to be consumed for transmitting scheduling signaling related to data transmission of the terminal device.

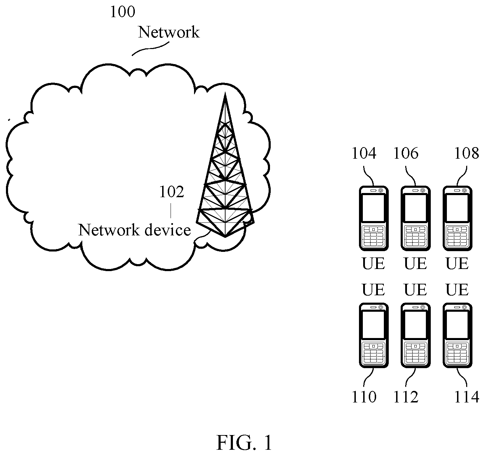

FIG. 1 is a schematic architectural diagram of a communications system to which embodiments of the present invention are applied. As shown in FIG. 1, the communications system 100 may include a network device 102 and terminal devices 104 to 114 (briefly referred to as UE in the figure). The network device 102 and the terminal devices 104 to 114 are connected in a wireless manner, in a wired manner, or in another manner.

A network in this embodiment of the present invention may be a public land mobile network (Public Land Mobile Network, "PLMN" for short), a D2D network, an M2M network, or another network. FIG. 1 is an example of a simplified schematic diagram. The network may further include another network device that is not shown in FIG. 1.

To resolve a large quantity of MTC services in the network in the future, and satisfy service transmission of low delay and high reliability, the present invention provides a solution of grant free (UL grant free) transmission. The grant free transmission herein may be uplink data transmission. The UL grant free transmission may be understood as any one of the following meanings, or multiple meanings of the following meanings, or a combination of some technical features of multiple meanings of the following meanings.

1. The grant free transmission may be: A network device allocates multiple transmission resources to a terminal device in advance and notifies the terminal device of the multiple transmission resources. When the terminal device needs to transmit uplink data, the terminal device selects at least one transmission resource from the multiple transmission resources allocated in advance by the network device, and sends the uplink data by using the selected transmission resource. The network device detects, on one or more transmission resources of the multiple transmission resources allocated in advance, the uplink data sent by the terminal device. The detection may be blind detection, or detection according to a particular control domain in the uplink data, or detection performed in another manner.

2. The grant free transmission may be: A network device allocates multiple transmission resources to a terminal device in advance and notifies the terminal device of the multiple transmission resources, so that when the terminal device needs to transmit uplink data, the terminal device selects at least one transmission resource from the multiple transmission resources allocated in advance by the network device, and sends the uplink data by using the selected transmission resource.

3. The grant free transmission may be: obtaining information about multiple transmission resources that are allocated in advance, when uplink data needs to be transmitted, selecting at least one transmission resource from the multiple transmission resources, and sending the uplink data by using the selected transmission resource. The information may be obtained from the network device.

4. The grant free transmission may be a method in which uplink data transmission of a terminal device can be implemented without dynamic scheduling by a network device. The dynamic scheduling may be a scheduling manner in which the network device indicates, by using signaling, a transmission resource for uplink data transmission of the terminal device each time. Optionally, to implement uplink data transmission of a terminal device may be understood as a case in which uplink data transmission is performed on data of two or more terminal devices on a same time-frequency resource. Optionally, the transmission resource may be a transmission resource of one or more transmission time units after a moment at which UE receives the signaling. One transmission time unit may be a minimum time unit during one transmission period, for example, a transmission time interval (Transmission Time Interval, "TTI" for short), whose value may be 1 ms, or a preset transmission time unit.

5. The grant free transmission may be: A terminal device performs uplink data transmission without being authorized by a network device. The authorization may be: The terminal device sends an uplink scheduling request to the network device, and after receiving the scheduling request, the network device sends an uplink grant to the terminal device. The uplink grant indicates an uplink transmission resource allocated to the terminal device.

6. The grant free transmission may be a contention transmission manner, and may be specifically a case in which multiple terminals perform uplink data transmission at the same time on a same time-frequency resource allocated in advance, and does not need to be authorized by a base station.

The data may include service data or signaling data.

The blind detection may be understood as detection performed, when whether any data arrives is unknown in advance, on data that may arrive. The blind detection may also be understood as detection performed when there is no explicit signaling instruction.

The transmission resource may include, but is not limited to, one or a combination of the following resources: a time domain resource, such as a radio frame, a subframe, or a symbol; a frequency domain resource, such as a subcarrier, or a resource block; a space domain resource, such as a transmit antenna, or a beam; a code domain resource, such as a sparse code multiple access (Sparse Code Multiple Access, "SCMA" for short) codebook group, a low density signature (Low Density Signature, "LDS" for short) group, or a CDMA code group; or an uplink pilot frequency resource.

The foregoing transmission resource may be transmitted according to control mechanisms including, but not limited to, the following control mechanisms: an uplink power control mechanism, such as an uplink transmit power upper limit control mechanism; a modulation and coding scheme setting mechanism, such as a mechanism of setting a transport block size, a bit rate, or a modulation order; and a retransmission mechanism, such as an HARQ mechanism.

A contention transmission unit (English full name may be: Contention Transmission Unit, English acronym may be: CTU) may be a basic transmission resource of grant free transmission. The CTU may be a transmission resource integrating a time, a frequency, and a code domain, or may be transmission resource integrating a time, a frequency, and a pilot frequency, or may be a transmission resource integrating a time, a frequency, a code domain, and a pilot frequency.

An access region of the CTU may be a time-frequency area used for grant free transmission.

During grant free transmission, the terminal device may be in connected mode, or may be in idle mode. In idle mode, because context resources in the terminal device and the network device have been released, when a packet is transmitted in a grant free transmission manner, encryption and decryption keys used in connected mode cannot be used any longer. Therefore, data transmission security cannot be ensured. Second, in the grant free transmission manner, a decrease in transmission efficiency caused by redundant protocol stack additional information is not expected, and a protocol stack should be as simple and efficient as possible. In addition, the network device in connected mode temporarily allocates a cell radio network temporary identifier (Cell RNTI, CRNTI) to the terminal device to identify a user. However, in GF transmission in idle mode, the CRNTI in connected mode cannot be used to identify a user. If the terminal device performs no encapsulation during GF transmission, and directly forwards an IP packet at an application layer, simple and efficient transmission can be implemented. However, in GF transmission, the CTU resource is not allocated by the base station to a terminal device for exclusive use, but multiple terminal devices may contend for the CTU resource at a same time for use. In this case, a packet camouflage or attack of another terminal device is easily caused, affecting security.

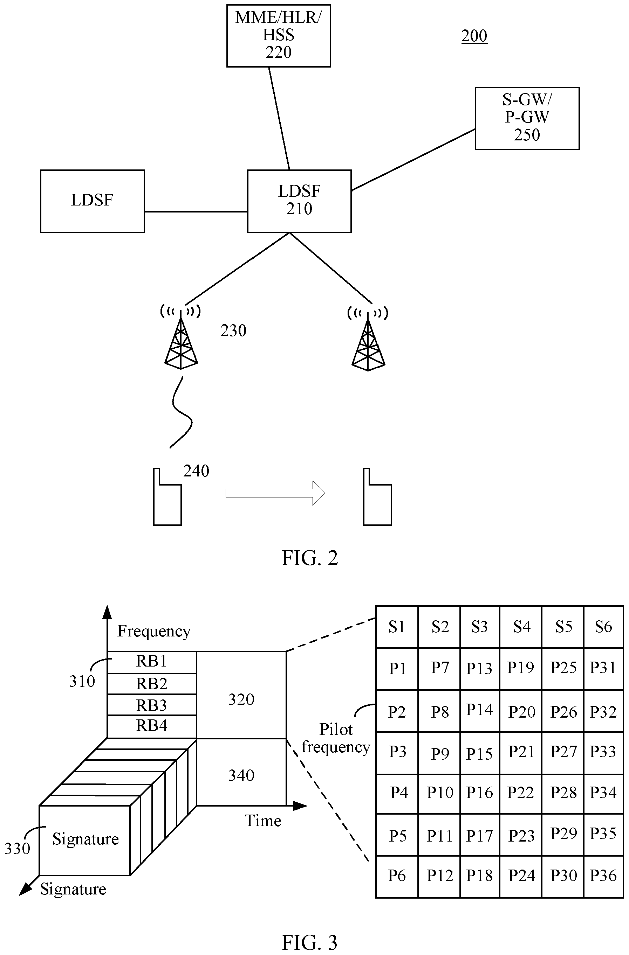

FIG. 2 is a schematic architectural diagram of a communications system 200 according to another embodiment of the present invention.

The system 200 includes network nodes such as a low delay service function (Low Delay Service Function, LDSF) entity 210, a base station 230, an MME/HLR/home subscriber server (Home Subscriber Server, HSS) 120, and a serving gateway (Serving GateWay, S-GW)/public data network gateway (Public Data Network GateWay, P-GW) 250. User equipment 240 communicates with the base station 230 by using an air interface. The LDSF 210 may be a logical function entity, or may be an actual physical device. The LDSF is mainly responsible for two subfunctions of grant free transmission: a function of registering an identity of user equipment supporting grant free transmission and a function of distributing grant free transmission data (for example, a packet).

For example, when the user equipment performs grant free transmission, the user equipment requests, by using the base station, the LDSF to register an identity of grant free transmission. The LDSF allocates, to the user equipment, a key specially used for grant free transmission and a user equipment identifier. The user equipment encrypts and encapsulates data by using the key and the user equipment identifier, and transmits the data in the grant free transmission manner. After receiving the data transmitted by the user equipment in the grant free manner, the base station sends the data to the LDSF. The LDSF distributes the data according to a destination address carried in the data.

It should be understood that, the LDSF in this embodiment of the present invention may be a logical function entity of an MME or of another core network device. For ease of description below, if there is no special description, descriptions are provided by using an example in which the LDSF is an independent physical device.

It should be understood that, the system 200 may include at least one LDSF, each base station is connected to at least one LDSF, and after being started, the base station maintains a transmission channel of an unauthorized transmission packet with the LDSF. For example, when the LDSF is a logical function entity of an MME, an interface between the LDSF and a network device is an S1 interface. When the LDSF is an independent physical device, the LDSF may be connected to the network device by using an interface similar to the S1 interface.

It should be further understood that, the embodiment of FIG. 1 is described by using an example in which the network device is a base station. Alternatively, the network device may be another access device (for example, a radio access point).

For ease of understanding of the present invention, terminologies in this embodiment of the present invention are described below.

The base station configures one or more contention transmission units for each cell managed by the base station. A limitation condition of each contention transmission unit includes a transmission resource. The transmission resource includes at least one of a time domain resource (such as a radio frame, a subframe, or a symbol), a frequency domain resource (such as a subcarrier or a resource block), or a space domain resource (such as a transmit antenna or a beam). Configuration information of a contention transmission unit that is delivered by the base station may include information about the transmission resource. Therefore, a terminal that has an unauthorized transmission capability and that uses an unauthorized transmission mode may select one contention transmission unit from one or more contention transmission units, and perform uplink transmission by using a transmission resource corresponding to the contention transmission unit.

It should be understood that, from a perspective of the terminal, the terminal can identify a cell, including a serving cell, a neighboring cell, or the like. Therefore, the contention transmission unit is actually for a cell. That is, the contention transmission unit of the base station is equivalent to an unauthorized area of a cell managed by the base station. Configuring a contention transmission unit by the base station is equivalent to configuring, by the base station, a contention transmission unit for a cell managed by the base station.

Optionally, during specific implementation, usually, the contention transmission unit of the base station may be configured in two manners. One manner is a distributed manner. That is, the base station itself configures a contention transmission unit of a cell managed by the base station. The other manner is centralized distribution. That is, there is a central unit (Central Unit, CU for short), and contention transmission units of base stations within a range managed by the central unit are centrally configured. The central unit is a logical entity, and a physical entity of the central unit may be located in an existing core-network network element, for example, a mobility management entity (Mobility Management Entity, MME), a serving gateway (Serving GateWay, S-GW), or a public data network gateway (Public Data Network GateWay, PDN-GW), or may be an independent core-network network element, or may be located in the base station. It should also be noted that, in a system implementation or a standard specification, the central unit may appear with another name, but should be understood as a same logical entity.

It should be noted that, in terms of a specific system implementation or standard specification, the contention transmission unit may appear with another name, such as a contention transmission area, or a contention transmission unit, but should be understood as a same concept.

FIG. 3 is a schematic diagram of a CTU resource definition according to an embodiment of the present invention.

FIG. 3 shows four contention access regions (also referred to as CTU access regions) 310, 320, 330, and 340. An available bandwidth is divided into time-frequency areas of the four contention access regions. Each contention access region may occupy a preset quantity of resource blocks (Resource Block). For example, in the embodiment of FIG. 3, the contention access region 310 includes four RBs: an RB 1, an RB 2, an RB 3 and an RB 4. This embodiment of the present invention is not limited thereto. For example, different contention access regions may include different quantities of RBs. In FIG. 3, each contention access region can support 36 UEs contending for 36 CTUs defined in the contention access region. Each CTU is a combination of a time, a frequency, a code resource or a signature, and a pilot frequency. The code resource includes a CDMA code, or an SCMA (Sparse Code Multiple Access) code, or an LDS (Low Density Signature), or another signature (signature), or the like. Each contention access region occupies one time-frequency resource area, each time-frequency resource area supports six signatures (S1 to S6), and each signature is mapped to six pilot frequencies, thereby generating 36 pilot frequencies (P1 to P36) in total. The network device may use a pilot frequency/signature decorrelator to detect or decode a signal that is sent by each UE in a CTU.

When UE enters a coverage area of an original network device, the UE may receive higher layer signaling sent by the network device. The higher layer signaling may carry a CTU access region definition (CTU access region definition), a total quantity of CTUs, a default mapping rule, or the like. Alternatively, the UE may preconfigure a default mapping rule. The UE may determine a proper CTU, so as to perform grant free transmission in the CTU. When different UEs perform grant free transmission in a same CTU, that is, contend for a same CTU, conflicts occur. The UE may determine, according to an instruction of the network device, whether there is any conflict. For example, an asynchronous HARQ method may be used to resolve a problem caused by a conflict. However, if a quantity of times of conflicts exceeds a predetermined threshold, the network device may be requested to remap a CTU. The network device sends information about the remapped CTU to the UE, so that the UE performs grant free transmission in the remapped CTU.

It should be understood that, for ease of description, FIG. 3 shows four contention access regions, but this embodiment of the present invention is not limited thereto. More or less contention access regions may be defined as needed.

The patent application No. PCT/CN2014/073084, entitled "System and Method for Uplink Grant-free Transmission Scheme", provides a technical solution of uplink grant free transmission. The application PCT/CN2014/073084 describes that a radio resource may be divided into various CTUs, and UE is mapped to a particular CTU. Each CTU may be allocated one group of codes. The group of codes allocated may be a group of CDMA codes, or may be an SCMA codebook set, an LDS group, a signature (signature) group, or the like. Each code may correspond to one group of pilot frequencies. A user may select one code and one pilot frequency in a pilot frequency group that corresponds to the code, to perform uplink transmission. Content of the application PCT/CN2014/073084 may also be understood as being used as one part of the content of this embodiment of the present invention by reference. Details are not described again.

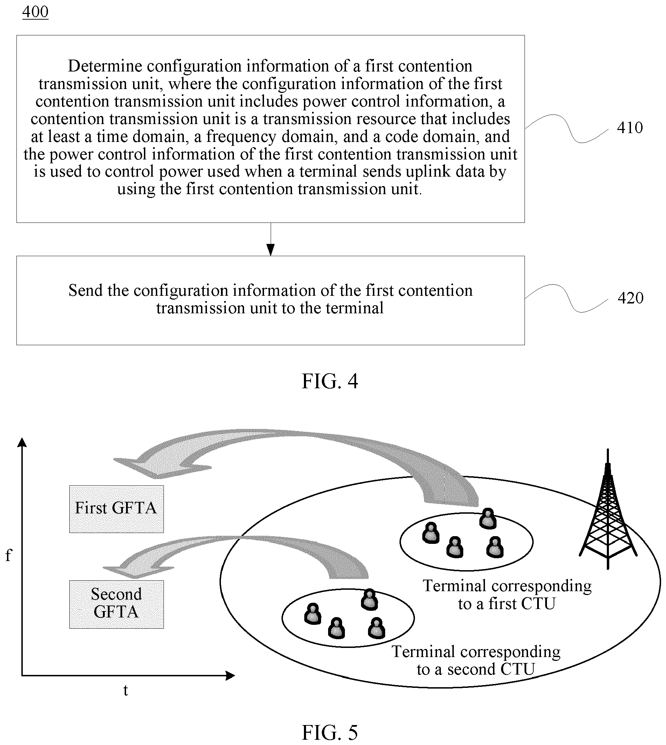

FIG. 4 is a schematic flowchart of a data transmission power control method 400 according to an embodiment of the present invention. As shown in FIG. 4, the method 400 includes the following steps.

410. Determine configuration information of a first contention transmission unit, where the configuration information of the first contention transmission unit includes power control information, a contention transmission unit is a transmission resource that includes at least a time domain, a frequency domain, and a code domain, and the power control information of the first contention transmission unit is used to control power used when a terminal sends uplink data by using the first contention transmission unit.

420. Send the configuration information of the first contention transmission unit to the terminal.

Specifically, a base station may determine configuration information of a contention transmission unit corresponding to a cell managed by the base station, where the configuration information includes power control information, and the power control information is used to control power used when a terminal sends uplink data by using the contention transmission unit, and then, send the configuration information to the terminal, so that the terminal may determine, according to the power control information in the configuration information, power when uplink transmission is performed by using the contention transmission unit, to perform uplink transmission.

Therefore, because the configuration information of the contention transmission unit carries the power control information for the contention transmission unit, the terminal can determine, according to the power control information in the configuration information, the power when uplink transmission is performed by using the contention transmission unit, so that uplink transmission power can be controlled, and interference between users in a cell and interference between neighboring cells can be reduced by further controlling uplink transmission power.

Optionally, in this embodiment of the present invention, when the terminal receives the configuration information, the terminal may perform uplink grant free transmission. The grant free transmission is: The network device allocates multiple CTUs to a terminal device in advance and notifies the terminal device of the multiple CTUs, so that when the terminal device needs to transmit uplink data, the terminal device selects as least one CTU from the multiple CTUs allocated in advance by the network device, and sends the uplink data by using the selected CTU.

Optionally, in this embodiment of the present invention, the power control information of the contention transmission unit may indicate a determined power value. In this case, the power control information may directly carry the power value, that is, an absolute power value, for example, 1 milliwatt. Alternatively, the power control information may be a relative value, and subtraction is performed between the relative value and determined reference power, to obtain the power value. In this case, an absolute value of the power needs to be obtained according to the relative value and the reference power. If the reference power is 1 milliwatt, and the power control information represented by the relative value is -3 dB, a power value that is actually indicated by the power control information and that is used for uplink transmission is 0.5 milliwatt.

Optionally, in this embodiment of the present invention, the power control information of the contention transmission unit may indicate a power range. In this case, the power range may be a continuous power range, and the power control information may carry an upper limit value and/or a lower limit value of the power range. Alternatively, the power range may be a discrete power range, that is, include multiple power values. Alternatively, the power range may be in another form.

Optionally, the code domain resource includes a sparse Code Division Multiple Access SCMA codebook, a low density signature LDS group, or a Code Division Multiple Access CDMA code group.

Specifically, in this embodiment of the present invention, an SCMA codebook, an LDS group, or a CDMA code group may be used as a code domain resource. It should be understood that, the foregoing listed specific examples used as a code domain resource are merely examples of descriptions, and the present invention is not limited thereto. Other codebooks that can be used for transmission all fall within the protection scope of the present invention.

Optionally, the SCMA codebook includes at least two code words. A codebook includes two or more code words. The code words in the codebook may be different from each other. The codebook may indicate a mapping relationship between a possible data combination of data with a particular length and a code word in the codebook. The mapping relationship may be a direct mapping relationship. The code word may be represented by a multidimensional complex vector. The multidimensional complex vector has two or more dimensions, and is used to indicate a mapping relationship between data and two or more modulation symbols. The modulation symbol includes at least one zero modulation symbol and at least one non-zero modulation symbol, and the data may be binary bit data or multivariate data.

Optionally, the LDS group includes at least two signature sequences. The LDS group is used to indicate a mapping relationship between at least two data combinations and the at least two signature sequences. The signature sequence is a multidimensional complex vector. The multidimensional vector includes at least one zero element and at least one non-zero element. The signature sequence is used to adjust an amplitude and a phase of a modulation symbol. The modulation symbol is obtained after a constellation mapping is performed on data by using a modulation constellation.

Specifically, a low density signature (LDS, Low Density Signature) technology is also a non-orthogonal multiple access and transmission technology. Certainly, the LDS technology may further be referred to with another name in the communications field. According to the technology, O (O is an integer not less than 1) data streams from one or more users are superimposed on P (P is an integer not less than 1) subcarriers for sending. Each piece of data of each data stream is extended on the P subcarriers by means of sparse spread spectrum. When O is greater than P, the technology can effectively improve a network capacity, including a quantity of users that can access a system, spectral efficiency, and the like. Therefore, as an important non-orthogonal access technology, the LDS technology has attracted more attention and become an important candidate access technology during evolution of the future wireless cellular network.

Optionally, in this embodiment of the present invention, in addition to the power control information, the configuration information of the contention transmission unit may further include, but is not limited to, one or a combination of the following: time domain resource information, such as a radio frame number, a subframe number, or a symbol number; frequency domain resource information, such as a subcarrier number, or a resource block number; space domain resource information, such as a transmit antenna number, or a beam number; uplink pilot frequency resource information; codebook resource information, such as an SCMA codebook, an LDS group, or a CDMA code group; or modulation and coding information, such as a transport block size, a bit rate, or a modulation order.

In this embodiment of the present invention, the contention transmission unit may further include a pilot frequency resource, and the code domain resource and the pilot frequency resource may form a code domain resource-pilot frequency combination. Code domain resources in different code domain resource-pilot frequency combinations may be the same or may be different, pilot frequencies in different code domain resource-pilot frequency combinations are different from each other, and the pilot frequencies in the different code domain resource-pilot frequency combinations are orthogonal to each other.

Optionally, in this embodiment of the present invention, a broadcast channel, for example, a broadcast control channel BCCH (Broadcast Control CHannel) in a Long Term Evolution LTE system, may be used to deliver the configuration information of the contention transmission unit to all or some terminals in the system in a broadcast manner. For example, the configuration information of the contention transmission unit is added to a broadcast message, or system information for delivery. Alternatively, a dedicated control channel, for example, a DCCH (Dedicated Control CHannel) in a Long Term Evolution LTE system may be used to deliver contention transmission unit indication information to a particular user or a particular group of users in a unicast manner. For example, the configuration information of the contention transmission unit is added to a radio resource control connection reconfiguration (RRC Connection Reconfiguration) instruction for delivery. Alternatively, another channel may be used to deliver contention transmission unit indication information to all terminals, or some terminals, or a particular terminal, or a particular group of terminals in the system in another manner.

Optionally, in this embodiment of the present invention, the power control information included in the configuration information of the first contention transmission unit is reconfigured power control information. That is, the base station may reconfigure, in real time according to an actual situation, the power control information corresponding to the first contention transmission unit.

Optionally, in this embodiment of the present invention, the determining configuration information of a first contention transmission unit includes:
determining the power control information of the first contention transmission unit according to at least one of the following:
   quality of an uplink channel between a terminal that performs uplink transmission by using the first contention transmission unit and a base station; quality of an uplink channel between a terminal that performs uplink transmission by using a third contention transmission unit and a base station; a distance between a terminal that performs uplink transmission by using the first contention transmission unit and a base station, and a distance between a terminal performs uplink transmission by using a third contention transmission unit and a base station; a quantity of terminals that perform uplink transmission by using the first contention transmission unit; a quantity of terminals that perform uplink transmission by using a third contention transmission unit; an overlapping status between a transmission resource of the first contention transmission unit and a transmission resource of a second contention transmission unit; uplink neighboring cell load of a first resource; or interference from a neighboring cell to a cell corresponding to the first contention transmission unit on a first resource, and interference from a neighboring cell to a cell corresponding to a non-first contention transmission unit using the first resource on the first resource, where the first resource is a resource that is the same as a transmission resource included in the first unauthorized transmission, the cell corresponding to the first contention transmission unit and a cell corresponding to the second contention transmission unit are different cells, a base station to which the cell corresponding to the first contention transmission unit belongs and a base station to which the cell corresponding to the second contention transmission unit belongs are a same base station or are neighboring base stations, and the cell corresponding to the first contention transmission unit and a cell corresponding to the third contention transmission unit are a same cell.

Optionally, the foregoing first resource may be used for unauthorized transmission, for example, used for transmission performed by using the first contention transmission unit and the second contention transmission unit, or used for both unauthorized transmission and authorized transmission, for example, used for transmission performed by using the first contention transmission unit and used for authorized transmission.

Optionally, the determining configuration information of a first contention transmission unit includes:
determining the configuration information of the first contention transmission unit according to at least one of the following principles:
   a power level corresponding to the power control information of the first contention transmission unit is negatively correlated with the quality of the uplink channel between the terminal that performs uplink transmission by using the first contention transmission unit and the base station;
   a power level corresponding to the power control information of the first contention transmission unit is positively correlated with the quality of the uplink channel between the terminal that performs uplink transmission by using the third contention transmission unit and the base station;
   a power level corresponding to the power control information of the first contention transmission unit is negatively correlated with the distance between the terminal that performs uplink transmission by using the first contention transmission unit and the base station;
   a power level corresponding to the power control information of the first contention transmission unit is negatively correlated with the distance between the terminal that performs uplink transmission by using the third contention transmission unit and the base station;
   a power level corresponding to the power control information of the first contention transmission unit is negatively correlated with the quantity of terminals that perform uplink transmission by using the first contention transmission unit;
   a power level corresponding to the power control information of the first contention transmission unit is positively correlated with the quantity of terminals that perform uplink transmission by using the third contention transmission unit;
   a power level corresponding to the power control information of the first contention transmission unit is negatively correlated with the uplink neighboring cell load on the first resource;
   a power level corresponding to the power control information of the first contention transmission unit is positively correlated with the interference from the neighboring cell to the cell corresponding to the first contention transmission unit on the first resource; or
   a power level corresponding to the power control information of the first contention transmission unit is negatively correlated with the interference from the neighboring cell to the cell corresponding to the non-first contention transmission unit using the first resource on the first resource.

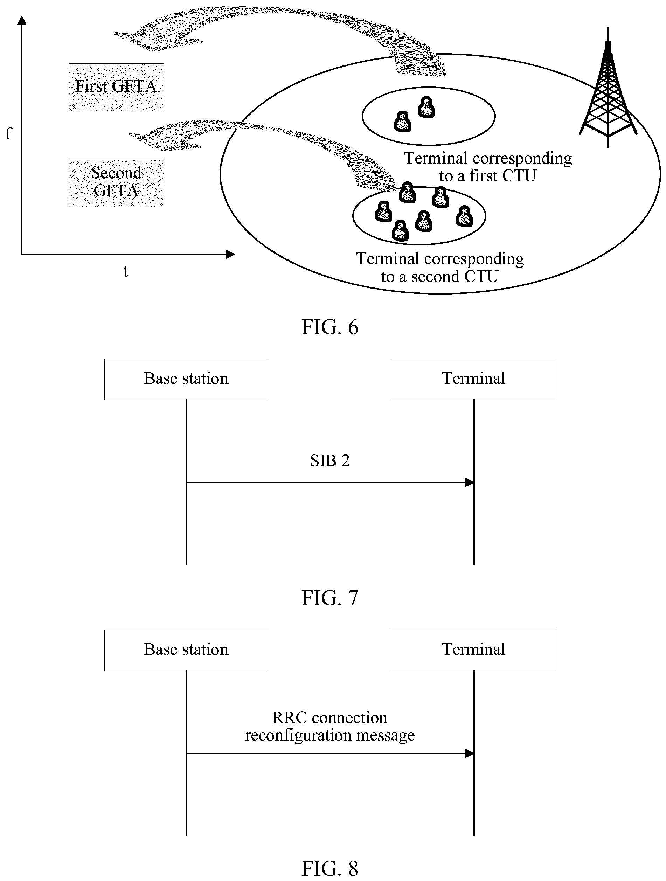

For ease of understanding, the following describes, with reference to examples, how to determine power control information of a contention transmission unit.
Example 1: As shown in FIG. 5, if quality of an uplink channel between a terminal or a terminal group that performs unauthorized transmission by using a first contention transmission unit and a base station is better than quality of an uplink channel between a terminal or a terminal group that performs unauthorized transmission by using a third contention transmission unit and the base station, uplink power of the first contention transmission unit is configured as first uplink power, and uplink power of the third contention transmission unit is configured as second uplink power. A first uplink power level is lower than a second uplink power level. Usually, a status of channel quality may be known in the following two manners: the base station may measure the uplink channel, or the terminal measures a downlink channel and feeds back a measurement result.
Example 2: If a distance between a terminal that performs unauthorized transmission by using a first contention transmission unit and a base station is less than a distance between a terminal that performs unauthorized transmission by using a second contention transmission unit and the base station, uplink power of the first contention transmission unit is configured as first uplink power, and uplink power of the second contention transmission unit is configured as second uplink power. A first uplink power level is lower than a second uplink power level. Optionally, a distance between a terminal using the contention transmission unit and the base station may be a sum of distances between all terminals and the base station, or a distance between a terminal using the contention transmission unit and the base station may be an average value of distances between all terminals and the base station, or the like.
Example 3: As shown in FIG. 6, if a quantity of terminals that perform unauthorized transmission by using a first contention transmission unit is greater than or much greater than a quantity of terminals that perform unauthorized transmission by using a third contention transmission unit, uplink power of the first contention transmission unit is configured as first uplink power, and uplink power of the third contention transmission unit is configured as second uplink power. A first uplink power level is lower than a second uplink power level.
   It should be understood that, although in examples 1, 2, and 3, how to specifically configure power control information of the first contention transmission unit uses uplink channel quality corresponding to another contention transmission unit or a quantity of terminals as a reference, the present invention is not limited thereto. For example, when the power control information of the first contention transmission unit is configured, setting may be performed according to a reference threshold. For example, if the uplink channel quality is greater than a threshold, the uplink power of the first contention transmission unit is set to a value corresponding to the threshold.
Example 4: If it is found, from obtained configuration information of a contention transmission unit of a neighboring base station, that transmission resources of a second contention transmission unit and a first contention transmission unit that are configured by the neighboring base station overlap (for example, time domain resources, frequency domain resources, and space domain resources overlap), first uplink power of the first contention transmission unit may be reconfigured, so that a first uplink power level after the reconfiguration is lower than a previous uplink power level. Certainly, when power control information of the first contention transmission unit is initially configured, if it is found that the transmission resource of the first contention transmission unit and a transmission resource of another contention transmission unit overlap, the uplink power of the first contention transmission unit is reduced. Therefore, relatively great interference from a terminal of the first contention transmission unit to a terminal of the second contention transmission unit can be avoided. It should be understood that, although the uplink power is determined according to a status of the transmission resource of the contention transmission unit of the neighboring base station in the example, the uplink power may also be determined according to a status of a transmission resource of an unauthorized area of a neighboring cell of a same base station in the present invention.
Example 5: If uplink load on a first resource that is the same as a first contention transmission unit is at a relatively high level, for example, a load indication value is greater than a preset threshold, first uplink power of the first contention transmission unit may be reconfigured, so that a first uplink power level after the reconfiguration is lower than a previous uplink power level. Certainly, when power control information of the first contention transmission unit is initially configured, if it is found that the uplink load on the first resource that is the same as the first contention transmission unit is at a relatively high level, the power control information of the first contention transmission unit may be set according to a specific load status. That is, higher uplink load indicates lower uplink power. Therefore, relatively great interference from a terminal of the first contention transmission unit to another terminal that uses the same resource can be avoided.
Example 6: If uplink interference from another cell that uses a first resource to a cell of a neighboring base station is at a relatively high level, for example, an interference indication value is greater than a preset threshold, first uplink power of a first contention transmission unit may be reconfigured, so that a first uplink power level after the reconfiguration is lower than a previous uplink power level. Certainly, when power control information of the first contention transmission unit is initially configured, if it is found that uplink interference to the neighboring base station is at a relatively high level, the power control information of the first contention transmission unit may be set according to a specific interference status of the neighboring base station. That is, higher uplink interference to the neighboring base station indicates lower uplink power. Therefore, relatively great interference from a terminal of the first contention transmission unit to a terminal of the neighboring base station can be avoided.

It should be understood that, in this embodiment of the present invention, in examples 1, 2, and 3, that the first uplink power level is lower than the second uplink power level is specifically: If the uplink power control information is particular determined power, first power is lower than second power; if the uplink power control information is a power upper limit, a first power upper limit is lower than a second power upper limit; if the uplink power control information is a power lower limit, a first power lower limit is lower than a second power lower limit; or if the uplink power control information is a discrete or continuous power range, an upper limit of a first power range is lower than an upper limit of a second power range, and/or a lower limit of the first power range is lower than a lower limit of the second power range. In examples 4, 5, and 6, that the first uplink power level after the reconfiguration is lower than the uplink power level before the reconfiguration is specifically: If the uplink power control information is particular determined power, first uplink power after the reconfiguration is lower than uplink power before the reconfiguration; if the uplink power control information is a power upper limit, a first uplink power upper limit after the reconfiguration is lower than an uplink power upper limit before the reconfiguration; if the uplink power control information is a power lower limit, a first uplink power lower limit after the reconfiguration is lower than an uplink power lower limit before the reconfiguration; or if the uplink power control information is a discrete or continuous power range, an upper limit of a first uplink power range after the reconfiguration is lower than an upper limit of an uplink power range before the reconfiguration, and/or a lower limit of the first uplink power range after the reconfiguration is lower than a lower limit of the uplink power range before the reconfiguration.

It should be further understood that, how to determine power control information of a contention transmission unit is not limited to the foregoing descriptions of examples, there is another implementation for this embodiment of the present invention. For example, two or more factors of quality of an uplink channel between a terminal that performs uplink transmission by using the first contention transmission unit and a base station, a quantity of terminals that perform uplink transmission by using the first contention transmission unit, an overlapping status between a transmission resource of the first contention transmission unit and a transmission resource of a contention transmission unit of a neighboring base station, uplink load information of a neighboring base station, or interference intensity information are used for comprehensive consideration, or the like.

Therefore, in this embodiment of the present invention, power control information of a first contention transmission unit is determined according to at least one of quality of an uplink channel that performs uplink transmission by using the first contention transmission unit, a quantity of terminals that perform uplink transmission by using the first contention transmission unit, an overlapping status between a transmission resource of the first contention transmission unit and a transmission resource of a contention transmission unit of a neighboring base station, uplink load information of a neighboring base station, or uplink interference intensity information, so that interference between users in a cell and interference between neighboring cells can be further avoided.

Optionally, in this embodiment of the present invention, configuration information of a contention transmission unit may be added to an SIB 2, and the base station delivers the SIB 2 to the terminal, for example, as shown in FIG. 7.

Optionally, in this embodiment of the present invention, configuration information of a contention transmission unit may be added to a radio resource control connection reconfiguration instruction, and the base station delivers the instruction to the terminal, for example, as shown in FIG. 8.

Optionally, in this embodiment of the present invention, a specific implementation of configuration information of a contention transmission unit may be shown as follows:

```
           GrantFreeTransAreaList ::= SEQUENCE (SIZE (1..maxGrantFreeTransArea)) OF
 GrantFreeTransAreaInfo
           GrantFreeTransAreaInfo ::= SEQUENCE {
                 powerControlInfo value
                 others value
           },
```

Herein,
GrantFreeTransAreaInfo indicates configuration information of a contention transmission unit, and includes at least uplink power control information, that is, powerControlInfo;
GrantFreeTransAreaList indicates a list of one or more GrantFreeTransAreaInfo, and maxGrantFreeTransArea indicates a maximum quantity of contention transmission units;
powerControlInfo may be used to indicate a determined power value, power upper limit, power lower limit, or continuous or discrete power range, and an absolute value or a relative value of powerControlInfo may be indicated in a BIT STRING manner, an INTEGER manner, an ENUMERARED manner, or the like;
others indicates other configuration information of the contention transmission unit except the uplink power control information powerControlInfo, and may include, but is not limited to: time domain resource information, and/or frequency domain resource information, and/or space domain resource information, and/or uplink pilot frequency resource information, and/or code domain resource information, and/or modulation and coding information, or the like, and such information may be indicated in a BIT STRING manner, an INTEGER manner, an ENUMERARED manner, or the like; and
value is a value of each piece of information, and may be indicated in a BIT STRING manner, an INTERGER manner, an ENUMERATED manner, or another manner.

More specific implementation examples are provided below. When the configuration information of the contention transmission unit includes time domain resource information, frequency domain resource information, and uplink power control information (a power upper limit), a possible implementation is:

```
           GrantFreeTransAreaList ::= SEQUENCE (SIZE (1..maxGrantFreeTransArea)) OF
 GrantFreeTransAreaInfo
           GrantFreeTransAreaInfo ::= SEQUENCE {
                 timeDomainResource BIT STRING (SIZE (X))
                 frequencyDomainResource BIT STRING (SIZE (Y))
           powerUpperBound INTEGER (a...b)
             },
```

Herein, maxGrantFreeTransArea indicates a maximum quantity of contention transmission units;
timeDomainResource is a time-frequency resource that is allocated to a corresponding contention transmission unit, where a period of the corresponding contention transmission unit is X subframes, and one bit represents one subframe, for example, a bit '1' represents that a contention transmission unit is located in a corresponding subframe;
frequencyDomainResource is a frequency domain resource that is allocated to a corresponding contention transmission unit, and each bit represents one resource block, for example, a bit '1' represents that a corresponding resource block is allocated to a contention transmission unit; and
powerUpperBound is a power upper limit defined in 36.xxx when uplink data is sent on a corresponding contention transmission unit in an unauthorized transmission mode, and the power upper limit defines maximum transmission power of a terminal.

The specific implementation manner of the configuration information of the contention transmission unit is provided above. When the configuration information of the contention transmission unit includes other resource information other than the foregoing resource, or the uplink power control information indicates a determined power value, power lower limit, or continuous or discrete power range, the configuration information of the contention transmission unit may be much easily provided with reference to the foregoing specific examples.

Therefore, because configuration information of a contention transmission unit carries power control information for the contention transmission unit, a terminal can determine, according to the power control information in the configuration information, power when uplink transmission is performed by using the contention transmission unit, so that uplink transmission power can be controlled, and interference between users in a cell and interference between neighboring cells can be reduced by further controlling uplink transmission power.

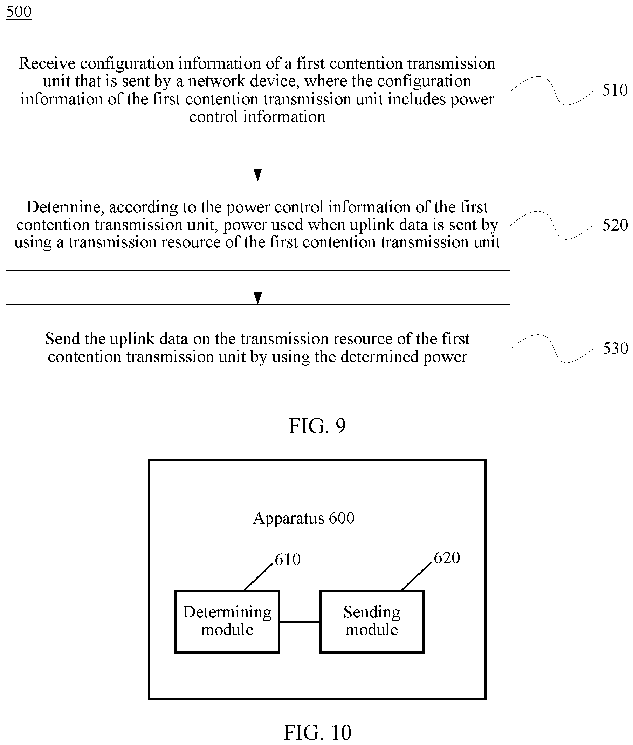

FIG. 9 is a schematic flowchart of a data transmission power control method 500 according to an embodiment of the present invention. As shown in FIG. 9, the method 500 includes the following steps:
510. Receive configuration information of the first contention transmission unit that is sent by a network device, where the configuration information of the first contention transmission unit includes power control information, a contention transmission unit is a transmission resource that includes at least a time domain, a frequency domain, and a code domain, and the power control information of the first contention transmission unit is used to control power used when a terminal sends uplink data by using the first contention transmission unit.
520. Determine, according to the power control information of the first contention transmission unit, power used when uplink data is sent by using a transmission resource of the first contention transmission unit.
530. Send the uplink data on the transmission resource of the first contention transmission unit by using the determined power.

Specifically, a base station may determine configuration information of a contention transmission unit corresponding to a cell managed by the base station, where the configuration information includes power control information, and the power control information is used to control power used when a terminal sends uplink data by using the contention transmission unit, and then, send the configuration information to the terminal, so that the terminal may determine, according to the power control information in the configuration information, power when uplink transmission is performed by using the contention transmission unit, to perform uplink transmission.

Therefore, because configuration information of a contention transmission unit carries power control information for the contention transmission unit, a terminal can determine, according to the power control information in the configuration information, power when uplink transmission is performed by using the contention transmission unit, so that uplink transmission power can be controlled, and interference between users in a cell and interference between neighboring cells can be reduced by further controlling uplink transmission power.

Optionally, in this embodiment of the present invention, the power control information of the first contention transmission unit is used to indicate a power value used when the terminal sends the uplink data by using the first contention transmission unit. In 520, the determining power used when uplink data is sent by using a transmission resource of the first contention transmission unit includes: determining that the power value is the power used when the uplink data is sent by using the transmission resource of the first contention transmission unit.

Optionally, in this embodiment of the present invention, the power control information of the first contention transmission unit is used to indicate a power range used when the terminal sends the uplink data by using the first contention transmission unit. In 520, the determining power used when uplink data is sent by using a transmission resource of the first contention transmission unit includes: determining a power value from the power range, and determining that the power value is the power used when the uplink data is sent by using the transmission resource of the first contention transmission unit.

Optionally, in this embodiment of the present invention, the power control information of the contention transmission unit may indicate a determined power value. In this case, the power control information may directly carry the power value, that is, an absolute power value, for example, 1 milliwatt. Alternatively, the power control information may be a relative value, and subtraction is performed between the relative value and determined reference power, to obtain the power value. In this case, an absolute value of the power needs to be obtained according to the relative value and the reference power. If the reference power is 1 milliwatt, and the power control information represented by the relative value is -3 dB, a power value that is actually indicated by the power control information and that is used for uplink transmission is 0.5 milliwatt.

Optionally, in this embodiment of the present invention, the power control information of the contention transmission unit may indicate a power range. In this case, the power range may be a continuous power range, and the power control information may carry an upper limit value and/or a lower limit value of the power range. Alternatively, the power range may be a discrete power range, that is, include multiple power values. Alternatively, the power range may be in another form.

Optionally, in this embodiment of the present invention, the power control information included in the configuration information of the first contention transmission unit is reconfigured power control information, so that a terminal device may reselect, according to the reconfigured power control information, power when uplink data is transmitted by using the transmission resource of the first contention transmission unit.

Optionally, the code domain resource includes a sparse Code Division Multiple Access SCMA codebook, a low density signature LDS group, or a Code Division Multiple Access CDMA code group.

Specifically, in this embodiment of the present invention, an SCMA codebook, an LDS group, or a CDMA code group may be used as a code domain resource. It should be understood that, the foregoing listed specific examples used as a code domain resource are merely examples of descriptions, and the present invention is not limited thereto. Other codebooks that can be used for transmission all fall within the protection scope of the present invention.

Optionally, the SCMA codebook includes at least two code words. A codebook includes two or more code words. The code words in the codebook may be different from each other. The codebook may indicate a mapping relationship between a possible data combination of data with a particular length and a code word in the codebook. The mapping relationship may be a direct mapping relationship. The code word may be represented by a multidimensional complex vector. The multidimensional complex vector has two or more dimensions, and is used to indicate a mapping relationship between data and two or more modulation symbols. The modulation symbol includes at least one zero modulation symbol and at least one non-zero modulation symbol, and the data may be binary bit data or multivariate data.

Optionally, the LDS group includes at least two signature sequences. The LDS group is used to indicate a mapping relationship between at least two data combinations and the at least two signature sequences. The signature sequence is a multidimensional complex vector. The multidimensional vector includes at least one zero element and at least one non-zero element. The signature sequence is used to adjust an amplitude and a phase of a modulation symbol. The modulation symbol is obtained after a constellation mapping is performed on data by using a modulation constellation.

Specifically, a low density signature (LDS, Low Density Signature) technology is also a non-orthogonal multiple access and transmission technology. Certainly, the LDS technology may further be referred to with another name in the communications field. According to the technology, O (O is an integer not less than 1) data streams from one or more users are superimposed on P (P is an integer not less than 1) subcarriers for sending. Each piece of data of each data stream is extended on the P subcarriers by means of sparse spread spectrum. When O is greater than P, the technology can effectively improve a network capacity, including a quantity of users that can access a system, spectral efficiency, and the like. Therefore, as an important non-orthogonal access technology, the LDS technology has attracted more attention and become an important candidate access technology during evolution of the future wireless cellular network.

Optionally, in this embodiment of the present invention, in addition to the power control information, the configuration information of the contention transmission unit may further include, but is not limited to, one or a combination of the following: time domain resource information, such as a radio frame number, a subframe number, or a symbol number; frequency domain resource information, such as a subcarrier number, or a resource block number; space domain resource information, such as a transmit antenna number, or a beam number; uplink pilot frequency resource information; code domain resource information, such as an SCMA codebook, an LDS group, or a CDMA code group; or modulation and coding information, such as a transport block size, a bit rate, or a modulation order.

If the configuration information includes different information, terminal devices are different. For ease of understanding, descriptions are provided below with reference to examples.
Example a: If the configuration information of the contention transmission unit includes time-frequency space domain resource information, uplink power control information, and uplink pilot frequency resource information, the terminal selects a resource from an available uplink pilot frequency resource and generates an uplink pilot frequency, to generate uplink data, adjusts transmit power of the generated pilot frequency and/or data by using the uplink power control information, and sends, on the time-frequency space domain resource of the contention transmission unit, the uplink pilot frequency and data after the power adjustment.
Example b: If the configuration information of the contention transmission unit includes time-frequency space domain resource information, uplink power control information, uplink pilot frequency resource information, and code domain resource information, the terminal device selects an uplink pilot frequency and a code domain resource from an available uplink pilot frequency resource, to generate an uplink pilot frequency, selects a code domain resource from an available code domain resource, to generate uplink data, adjusts transmit power of the generated pilot frequency and/or data by using the uplink power control information, and sends, on the time-frequency space domain resource of the contention transmission unit, the uplink pilot frequency and data after the power adjustment.
Example c: If the configuration information of the contention transmission unit includes modulation and coding information, the terminal device needs to generate uplink data according to a transport block size, a bit rate, or a modulation order in the modulation and coding information.

Optionally, in this embodiment of the present invention, the transmission resource further includes a pilot frequency resource, and the code domain resource and the pilot frequency resource form a code domain resource-pilot frequency combination. Code domain resources in different code domain resource-pilot frequency combinations may be the same or may be different, and pilot frequencies in the different code domain resource-pilot frequency combinations are orthogonal to each other.

Optionally, in this embodiment of the present invention, in 510, the receiving configuration information of the first contention transmission unit that is sent by a network device includes:
receiving the configuration information of the first contention transmission unit that is sent by the network device by using an SIB2 message or an RRC reconfiguration message.

Therefore, because configuration information of a contention transmission unit carries power control information for the contention transmission unit, a terminal can determine, according to the power control information in the configuration information, power when uplink transmission is performed by using the contention transmission unit, so that uplink transmission power can be controlled, and interference between users in a cell and interference between neighboring cells can be reduced by further controlling uplink transmission power.

FIG. 10 is a schematic block diagram of a data transmission power control apparatus 600 according to an embodiment of the present invention. As shown in FIG. 10, the apparatus 600 includes:
a determining module 610, configured to determine configuration information of a first contention transmission unit, where the configuration information of the first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal sends uplink data by using the first contention transmission unit; and
a sending module 620, configured to send the configuration information of the first contention transmission unit to the terminal device.

Optionally, the determining module 610 is specifically configured to:
determine the power control information of the first contention transmission unit according to at least one of the following:
   quality of an uplink channel between a terminal that performs uplink transmission by using the first contention transmission unit and a base station;
   quality of an uplink channel between a terminal that performs uplink transmission by using a third contention transmission unit and a base station;
   a distance between a terminal that performs uplink transmission by using the first contention transmission unit and a base station, and a distance between a terminal performs uplink transmission by using a third contention transmission unit and a base station;
   a quantity of terminals that perform uplink transmission by using the first contention transmission unit;
   a quantity of terminals that perform uplink transmission by using a third contention transmission unit;
   an overlapping status between a transmission resource of the first contention transmission unit and a transmission resource of a second contention transmission unit;
   uplink neighboring cell load of a first resource; or
   interference from a neighboring cell to a cell corresponding to the first contention transmission unit on a first resource, and interference from a neighboring cell to a cell corresponding to a non-first contention transmission unit using the first resource on the first resource, where
   the first resource is a resource that is the same as a transmission resource included in the first unauthorized transmission, the cell corresponding to the first contention transmission unit and a cell corresponding to the second contention transmission unit are different cells, a base station to which the cell corresponding to the first contention transmission unit belongs and a base station to which the cell corresponding to the second contention transmission unit belongs are a same base station or are neighboring base stations, and the cell corresponding to the first contention transmission unit and a cell corresponding to the third contention transmission unit are a same cell.

Optionally, the determining module 610 is specifically configured to:
determine the configuration information of the first contention transmission unit according to at least one of the following principles:
   a power level corresponding to the power control information of the first contention transmission unit is negatively correlated with the quality of the uplink channel between the terminal that performs uplink transmission by using the first contention transmission unit and the base station;
   a power level corresponding to the power control information of the first contention transmission unit is positively correlated with the quality of the uplink channel between the terminal that performs uplink transmission by using the third contention transmission unit and the base station;
   a power level corresponding to the power control information of the first contention transmission unit is negatively correlated with the distance between the terminal that performs uplink transmission by using the first contention transmission unit and the base station;
   a power level corresponding to the power control information of the first contention transmission unit is negatively correlated with the distance between the terminal that performs uplink transmission by using the third contention transmission unit and the base station;
   a power level corresponding to the power control information of the first contention transmission unit is negatively correlated with the quantity of terminals that perform uplink transmission by using the first contention transmission unit;
   a power level corresponding to the power control information of the first contention transmission unit is positively correlated with the quantity of terminals that perform uplink transmission by using the third contention transmission unit;
   a power level corresponding to the power control information of the first contention transmission unit is negatively correlated with the uplink neighboring cell load on the first resource;
   a power level corresponding to the power control information of the first contention transmission unit is positively correlated with the interference from the neighboring cell to the cell corresponding to the first contention transmission unit on the first resource; or
   a power level corresponding to the power control information of the first contention transmission unit is negatively correlated with the interference from the neighboring cell to the cell corresponding to the non-first contention transmission unit using the first resource on the first resource.

Optionally, the power control information of the first contention transmission unit is used to indicate a power value or a power range used when the terminal sends the uplink data by using the first contention transmission unit.

Optionally, the power control information included in the configuration information of the first contention transmission unit is reconfigured power control information.

Optionally, the CTU is a transmission resource that includes a time domain, a frequency domain, a code domain, and a pilot frequency. A code domain resource and a pilot frequency resource form a code domain resource-pilot frequency combination. Pilot frequencies in different code domain resource-pilot frequency combinations are orthogonal to each other.

The configuration information of the first contention transmission unit further includes transmission resource information.

Optionally, the sending module 620 is specifically configured to:
send the configuration information of the first contention transmission unit to the terminal by using an SIB2 message or an RRC reconfiguration message.

Optionally, the code domain resource is a Code Division Multiple Access CDMA code group, a sparse code multiple access SCMA codebook, or a low density signature LDS group.

Optionally, the SCMA codebook includes at least two code words. A codebook includes two or more code words. The code words in the codebook may be different from each other. The codebook may indicate a mapping relationship between a possible data combination of data with a particular length and a code word in the codebook. The mapping relationship may be a direct mapping relationship. The code word may be represented by a multidimensional complex vector. The multidimensional complex vector has two or more dimensions, and is used to indicate a mapping relationship between data and two or more modulation symbols. The modulation symbol includes at least one zero modulation symbol and at least one non-zero modulation symbol, and the data may be binary bit data or multivariate data.

Optionally, the LDS group includes at least two signature sequences. The LDS group is used to indicate a mapping relationship between at least two data combinations and the at least two signature sequences. The signature sequence is a multidimensional complex vector. The multidimensional vector includes at least one zero element and at least one non-zero element. The signature sequence is used to adjust an amplitude and a phase of a modulation symbol. The modulation symbol is obtained after a constellation mapping is performed on data by using a modulation constellation.

Specifically, a low density signature (LDS, Low Density Signature) technology is also a non-orthogonal multiple access and transmission technology. Certainly, the LDS technology may further be referred to with another name in the communications field. According to the technology, O (O is an integer not less than 1) data streams from one or more users are superimposed on P (P is an integer not less than 1) subcarriers for sending. Each piece of data of each data stream is extended on the P subcarriers by means of sparse spread spectrum. When O is greater than P, the technology can effectively improve a network capacity, including a quantity of users that can access a system, spectral efficiency, and the like. Therefore, as an important non-orthogonal access technology, the LDS technology has attracted more attention and become an important candidate access technology during evolution of the future wireless cellular network.

Optionally, the CTU is an unauthorized transmission resource.

Optionally, the apparatus 600 is a base station.

Optionally, the apparatus 600 may perform corresponding steps in the data transmission power control method 400, may correspond to the network device in the method part, and more specifically, is a base station. For brevity, details are not described herein again.

Therefore, because configuration information of a contention transmission unit carries power control information for the contention transmission unit, a terminal can determine, according to the power control information in the configuration information, power when uplink transmission is performed by using the contention transmission unit, so that uplink transmission power can be controlled, and interference between users in a cell and interference between neighboring cells can be reduced by further controlling uplink transmission power.

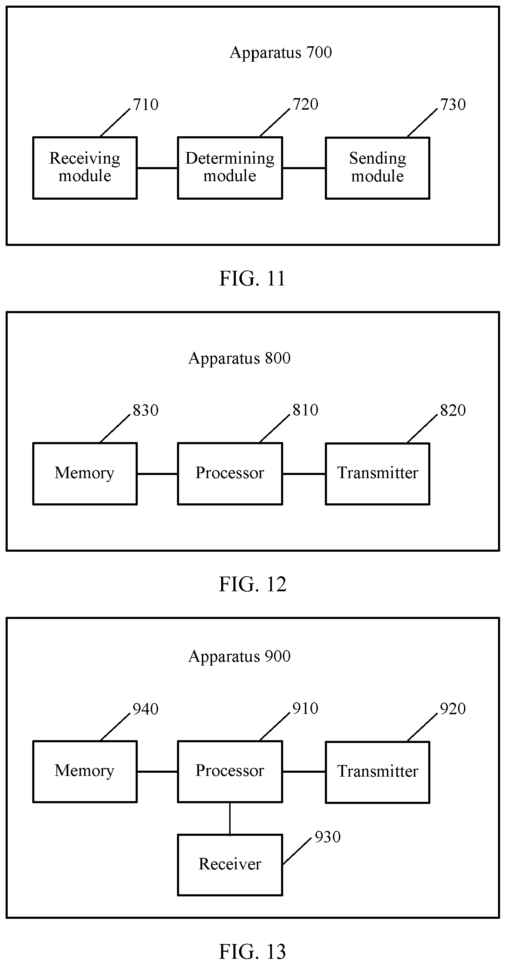

FIG. 11 is a schematic block diagram of a data transmission power control apparatus 700 according to an embodiment of the present invention. As shown in FIG. 11, the apparatus 700 includes:
a receiving module 710, configured to receive configuration information of the first contention transmission unit that is sent by a network device, where the configuration information of the first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal sends uplink data by using the first contention transmission unit;
a determining module 720, configured to determine, according to the power control information of the first contention transmission unit, power used when uplink data is sent by using a transmission resource of the first contention transmission unit; and
a sending module 730, configured to send the uplink data on the transmission resource of the first contention transmission unit by using the power determined by the determining module 720.

Optionally, the power control information of the first contention transmission unit is used to indicate a power value used when the terminal sends the uplink data by using the first contention transmission unit; and the determining module is specifically configured to determine that the power value is the power used when the uplink data is sent by using the transmission resource of the first contention transmission unit; or
the power control information of the first contention transmission unit is used to indicate a power range used when the terminal sends the uplink data by using the first contention transmission unit; and the determining module is specifically configured to: determine a power value from the power range, and determine that the power value is the power used when the uplink data is sent by using the transmission resource of the first contention transmission unit.

Optionally, the power control information included in the configuration information of the first contention transmission unit is reconfigured power control information.

Optionally, the CTU is a transmission resource that includes a time domain, a frequency domain, a code domain, and a pilot frequency. A code domain resource and a pilot frequency resource form a code domain resource-pilot frequency combination. Pilot frequencies in different code domain resource-pilot frequency combinations are orthogonal to each other.

The configuration information of the first contention transmission unit further includes transmission resource information.

Optionally, the receiving module 710 is specifically configured to:
receive the configuration information of the first contention transmission unit that is sent by the network device by using an SIB2 message or an RRC reconfiguration message.

Optionally, the code domain resource is a Code Division Multiple Access CDMA code group, a sparse code multiple access SCMA codebook, or a low density signature LDS group.

Optionally, the SCMA codebook includes at least two code words. A codebook includes two or more code words. The code words in the codebook may be different from each other. The codebook may indicate a mapping relationship between a possible data combination of data with a particular length and a code word in the codebook. The mapping relationship may be a direct mapping relationship. The code word may be represented by a multidimensional complex vector. The multidimensional complex vector has two or more dimensions, and is used to indicate a mapping relationship between data and two or more modulation symbols. The modulation symbol includes at least one zero modulation symbol and at least one non-zero modulation symbol, and the data may be binary bit data or multivariate data.

Optionally, the LDS group includes at least two signature sequences. The LDS group is used to indicate a mapping relationship between at least two data combinations and the at least two signature sequences. The signature sequence is a multidimensional complex vector. The multidimensional vector includes at least one zero element and at least one non-zero element. The signature sequence is used to adjust an amplitude and a phase of a modulation symbol. The modulation symbol is obtained after a constellation mapping is performed on data by using a modulation constellation.

Specifically, a low density signature (LDS, Low Density Signature) technology is also a non-orthogonal multiple access and transmission technology. Certainly, the LDS technology may further be referred to with another name in the communications field. According to the technology, O (O is an integer not less than 1) data streams from one or more users are superimposed on P (P is an integer not less than 1) subcarriers for sending. Each piece of data of each data stream is extended on the P subcarriers by means of sparse spread spectrum. When O is greater than P, the technology can effectively improve a network capacity, including a quantity of users that can access a system, spectral efficiency, and the like. Therefore, as an important non-orthogonal access technology, the LDS technology has attracted more attention and become an important candidate access technology during evolution of the future wireless cellular network.

Optionally, the CTU is an unauthorized transmission resource.

Optionally, the apparatus 600 is a terminal device.

Optionally, the apparatus 700 may perform corresponding steps in the data transmission power control method 500, and may correspond to the terminal device in the method part. For brevity, details are not described herein again.

Therefore, because configuration information of a contention transmission unit carries power control information for the contention transmission unit, a terminal can determine, according to the power control information in the configuration information, power when uplink transmission is performed by using the contention transmission unit, so that uplink transmission power can be controlled, and interference between users in a cell and interference between neighboring cells can be reduced by further controlling uplink transmission power.

FIG. 12 is a schematic block diagram of a data transmission power control apparatus 800 according to an embodiment of the present invention. As shown in FIG. 12, the apparatus 800 includes a processor 810, a transmitter 820, and a memory 830. The memory 830 is configured to store program code. The processor 810 is configured to invoke the program code stored in the memory 830, to perform the following operations:
determining configuration information of a first contention transmission unit, where the configuration information of the first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal device sends uplink data by using the first contention transmission unit; and
sending the configuration information of the first contention transmission unit to the terminal device by using the transmitter 820.

Optionally, the processor 810 is configured to invoke the program code stored in the memory 830, to specifically perform the following operation:
determining the power control information of the first contention transmission unit according to at least one of the following:
   quality of an uplink channel between a terminal that performs uplink transmission by using the first contention transmission unit and a base station;
   quality of an uplink channel between a terminal that performs uplink transmission by using a third contention transmission unit and a base station;
   a distance between a terminal that performs uplink transmission by using the first contention transmission unit and a base station, and a distance between a terminal performs uplink transmission by using a third contention transmission unit and a base station;
   a quantity of terminals that perform uplink transmission by using the first contention transmission unit;
   a quantity of terminals that perform uplink transmission by using a third contention transmission unit;
   an overlapping status between a transmission resource of the first contention transmission unit and a transmission resource of a second contention transmission unit;
   uplink neighboring cell load of a first resource; or
   interference from a neighboring cell to a cell corresponding to the first contention transmission unit on a first resource, and interference from a neighboring cell to a cell corresponding to a non-first contention transmission unit using the first resource on the first resource, where
   the first resource is a resource that is the same as a transmission resource included in first unauthorized transmission, the cell corresponding to the first contention transmission unit and a cell corresponding to the second contention transmission unit are different cells, a base station to which the cell corresponding to the first contention transmission unit belongs and a base station to which the cell corresponding to the second contention transmission unit belongs are a same base station or are neighboring base stations, and the cell corresponding to the first contention transmission unit and a cell corresponding to the third contention transmission unit are a same cell.

Optionally, the processor 810 is configured to invoke the program code stored in the memory 830, to specifically perform the following operation:
determining the configuration information of the first contention transmission unit according to at least one of the following principles:
   a power level corresponding to the power control information of the first contention transmission unit is negatively correlated with the quality of the uplink channel between the terminal that performs uplink transmission by using the first contention transmission unit and the base station;
   a power level corresponding to the power control information of the first contention transmission unit is positively correlated with the quality of the uplink channel between the terminal that performs uplink transmission by using the third contention transmission unit and the base station;
   a power level corresponding to the power control information of the first contention transmission unit is negatively correlated with the distance between the terminal that performs uplink transmission by using the first contention transmission unit and the base station;
   a power level corresponding to the power control information of the first contention transmission unit is negatively correlated with the distance between the terminal that performs uplink transmission by using the third contention transmission unit and the base station;
   a power level corresponding to the power control information of the first contention transmission unit is negatively correlated with the quantity of terminals that perform uplink transmission by using the first contention transmission unit;
   a power level corresponding to the power control information of the first contention transmission unit is positively correlated with the quantity of terminals that perform uplink transmission by using the third contention transmission unit;
   a power level corresponding to the power control information of the first contention transmission unit is negatively correlated with the uplink neighboring cell load on the first resource;
   a power level corresponding to the power control information of the first contention transmission unit is positively correlated with the interference from the neighboring cell to the cell corresponding to the first contention transmission unit on the first resource; or
   a power level corresponding to the power control information of the first contention transmission unit is negatively correlated with the interference from the neighboring cell to the cell corresponding to the non-first contention transmission unit using the first resource on the first resource.

Optionally, the power control information of the first contention transmission unit is used to indicate a power value or a power range used when the terminal sends the uplink data by using the first contention transmission unit.

Optionally, the power control information included in the configuration information of the first contention transmission unit is reconfigured power control information.

Optionally, the CTU is a transmission resource that includes a time domain, a frequency domain, a code domain, and a pilot frequency. A code domain resource and a pilot frequency resource form a code domain resource-pilot frequency combination. Pilot frequencies in different code domain resource-pilot frequency combinations are orthogonal to each other.

The configuration information of the first contention transmission unit further includes transmission resource information.

Optionally, the processor 810 is configured to invoke the program code stored in the memory 830, to specifically perform the following operation:
sending the configuration information of the first contention transmission unit to the terminal by using the transmitter 820 and by using an SIB2 message or an RRC reconfiguration message.

Optionally, the code domain resource is a Code Division Multiple Access CDMA code group, a sparse code multiple access SCMA codebook, or a low density signature LDS group.

Optionally, the SCMA codebook includes at least two code words. A codebook includes two or more code words. The code words in the codebook may be different from each other. The codebook may indicate a mapping relationship between a possible data combination of data with a particular length and a code word in the codebook. The mapping relationship may be a direct mapping relationship. The code word may be represented by a multidimensional complex vector. The multidimensional complex vector has two or more dimensions, and is used to indicate a mapping relationship between data and two or more modulation symbols. The modulation symbol includes at least one zero modulation symbol and at least one non-zero modulation symbol, and the data may be binary bit data or multivariate data.

Optionally, the LDS group includes at least two signature sequences. The LDS group is used to indicate a mapping relationship between at least two data combinations and the at least two signature sequences. The signature sequence is a multidimensional complex vector. The multidimensional vector includes at least one zero element and at least one non-zero element. The signature sequence is used to adjust an amplitude and a phase of a modulation symbol. The modulation symbol is obtained after a constellation mapping is performed on data by using a modulation constellation.

Specifically, a low density signature (LDS, Low Density Signature) technology is also a non-orthogonal multiple access and transmission technology. Certainly, the LDS technology may further be referred to with another name in the communications field. According to the technology, O (O is an integer not less than 1) data streams from one or more users are superimposed on P (P is an integer not less than 1) subcarriers for sending. Each piece of data of each data stream is extended on the P subcarriers by means of sparse spread spectrum. When O is greater than P, the technology can effectively improve a network capacity, including a quantity of users that can access a system, spectral efficiency, and the like. Therefore, as an important non-orthogonal access technology, the LDS technology has attracted more attention and become an important candidate access technology during evolution of the future wireless cellular network.

Optionally, the CTU is an unauthorized transmission resource.

Optionally, the apparatus 800 is a base station.

Optionally, the apparatus 800 may further include a bus, configured to connect components in the apparatus, for example, a receiver, the transmitter, the memory, and the processor.

Optionally, the apparatus 800 may perform corresponding steps in 400, may correspond to the network device in the method part, and more specifically, is a base station. For brevity, details are not described herein again.

Therefore, because configuration information of a contention transmission unit carries power control information for the contention transmission unit, a terminal can determine, according to the power control information in the configuration information, power when uplink transmission is performed by using the contention transmission unit, so that uplink transmission power can be controlled, and interference between users in a cell and interference between neighboring cells can be reduced by further controlling uplink transmission power.

FIG. 13 is a schematic block diagram of a data transmission power control apparatus 900 according to an embodiment of the present invention. As shown in FIG. 13, the apparatus 900 includes a processor 910, a transmitter 920, a receiver 930, and a memory 940. The memory 940 is configured to store program code. The processor 910 is configured to invoke the program code stored in the memory 940 to perform the following operations:
receiving, by using the receiver 930, configuration information of the first contention transmission unit that is sent by a network device, where the configuration information of the first contention transmission unit includes power control information, a contention transmission unit is a transmission resource that includes at least a time domain, a frequency domain, and a code domain or a transmission resource that includes at least a time domain, a frequency domain, and a code domain, and the power control information of the first contention transmission unit is used to control power used when a terminal sends uplink data by using the first contention transmission unit;
determining, according to the power control information of the first contention transmission unit, power used when uplink data is sent by using a transmission resource of the first contention transmission unit; and
sending the uplink data on the transmission resource of the first contention transmission unit by using the transmitter and by using the determined power.

Optionally, the power control information of the first contention transmission unit is used to indicate a power value used when the terminal sends the uplink data by using the first contention transmission unit; and the processor is configured to invoke the program code stored in the memory, to specifically perform the following operation: determining that the power value is the power used when the uplink data is sent by using the transmission resource of the first contention transmission unit; or
the power control information of the first contention transmission unit is used to indicate a power range used when the terminal sends the uplink data by using the first contention transmission unit; and the processor is configured to invoke the program code stored in the memory, to specifically perform the following operations: determining a power value from the power range, and determining that the power value is the power used when the uplink data is sent by using the transmission resource of the first contention transmission unit.

Optionally, the power control information included in the configuration information of the first contention transmission unit is reconfigured power control information.

Optionally, the CTU is a transmission resource that includes a time domain, a frequency domain, a code domain, and a pilot frequency. A code domain resource and a pilot frequency resource form a code domain resource-pilot frequency combination. Pilot frequencies in different code domain resource-pilot frequency combinations are orthogonal to each other.

The configuration information of the first contention transmission unit further includes transmission resource information.

Optionally, the processor is configured to invoke the program code stored in the memory, to specifically perform the following operation:
receiving, by using the receiver, the configuration information of the first contention transmission unit that is sent by the network device by using an SIB2 message or an RRC reconfiguration message.

Optionally, the code domain resource is a Code Division Multiple Access CDMA code group, a sparse code multiple access SCMA codebook, or a low density signature LDS group.

Optionally, the SCMA codebook includes at least two code words. A codebook includes two or more code words. The code words in the codebook may be different from each other. The codebook may indicate a mapping relationship between a possible data combination of data with a particular length and a code word in the codebook. The mapping relationship may be a direct mapping relationship. The code word may be represented by a multidimensional complex vector. The multidimensional complex vector has two or more dimensions, and is used to indicate a mapping relationship between data and two or more modulation symbols. The modulation symbol includes at least one zero modulation symbol and at least one non-zero modulation symbol, and the data may be binary bit data or multivariate data.

Optionally, the LDS group includes at least two signature sequences. The LDS group is used to indicate a mapping relationship between at least two data combinations and the at least two signature sequences. The signature sequence is a multidimensional complex vector. The multidimensional vector includes at least one zero element and at least one non-zero element. The signature sequence is used to adjust an amplitude and a phase of a modulation symbol. The modulation symbol is obtained after a constellation mapping is performed on data by using a modulation constellation.

Specifically, a low density signature (LDS, Low Density Signature) technology is also a non-orthogonal multiple access and transmission technology. Certainly, the LDS technology may further be referred to with another name in the communications field. According to the technology, O (O is an integer not less than 1) data streams from one or more users are superimposed on P (P is an integer not less than 1) subcarriers for sending. Each piece of data of each data stream is extended on the P subcarriers by means of sparse spread spectrum. When O is greater than P, the technology can effectively improve a network capacity, including a quantity of users that can access a system, spectral efficiency, and the like. Therefore, as an important non-orthogonal access technology, the LDS technology has attracted more attention and become an important candidate access technology during evolution of the future wireless cellular network.

Optionally, the CTU is an unauthorized transmission resource.

Optionally, the apparatus 900 is a terminal device.

Optionally, the apparatus 900 may further include a bus, configured to connect components in the apparatus, for example, the receiver, the transmitter, the memory, and the processor.

Optionally, the apparatus 700 may perform corresponding steps in the data transmission power control method 500, and may correspond to the terminal device in the method part. For brevity, details are not described herein again.

Therefore, because configuration information of a contention transmission unit carries power control information for the contention transmission unit, a terminal can determine, according to the power control information in the configuration information, power when uplink transmission is performed by using the contention transmission unit, so that uplink transmission power can be controlled, and interference between users in a cell and interference between neighboring cells can be reduced by further controlling uplink transmission power.

It may be understood that, for the brevity and clarity of the application document, technical features and description in an embodiment in the foregoing are applicable to other embodiments. For example, technical features in a method embodiment may be applicable to an apparatus embodiment or another method embodiment, and are no longer described in detail one by one in the other embodiments.

Sending performed by using the sending module or transmitter in the foregoing embodiments may be sending performed on an air interface, or may not be sending performed on an air interface but sending to another device so that the another device performs sending on the air interface. Receiving performed by using the receiving module or receiver in the foregoing embodiments may be receiving on an air interface, or may not be receiving performed on an air interface but receiving from another device that performs receiving on the air interface.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

It may be understood that, for the brevity and clarity of the application document, technical features and description in an embodiment in the foregoing are applicable to other embodiments. For example, technical features in a method embodiment may be applicable to an apparatus embodiment or another method embodiment, and are no longer described in detail one by one in the other embodiments.

Sending performed by using the sending module, sending unit, or transmitter in the foregoing embodiments may be sending performed on an air interface, or may not be sending performed on an air interface but sending to another device so that the another device performs sending on the air interface. Receiving performed by using the receiving module, receiving unit, or receiver in the foregoing embodiments may be receiving on an air interface, or may not be receiving performed on an air interface but receiving from another device that performs receiving on the air interface. The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for data transmission power control, comprising:
determining configuration information of a first contention transmission unit, wherein the configuration information of the first contention transmission unit comprises power control information, a contention transmission unit is or a transmission resource that comprises at least a time domain, a frequency domain, and a code domain, and the power control information of the first contention transmission unit is used to control power used when a terminal device sends uplink data by using the first contention transmission unit; and
sending the configuration information of the first contention transmission unit to the terminal device.

2. The method according to claim 1, wherein the determining configuration information of a first contention transmission unit comprises:
determining the power control information of the first contention transmission unit according to at least one of the following:
quality of an uplink channel between a terminal that performs uplink transmission by using the first contention transmission unit and a base station;
quality of an uplink channel between a terminal that performs uplink transmission by using a third contention transmission unit and a base station;
a distance between a terminal that performs uplink transmission by using the first contention transmission unit and a base station, and a distance between a terminal performs uplink transmission by using a third contention transmission unit and a base station;
a quantity of terminals that perform uplink transmission by using the first contention transmission unit;
a quantity of terminals that perform uplink transmission by using a third contention transmission unit;
an overlapping status between a transmission resource of the first contention transmission unit and a transmission resource of a second contention transmission unit;
uplink neighboring cell load of a first resource; or
interference from a neighboring cell to a cell corresponding to the first contention transmission unit on a first resource, and interference from a neighboring cell to a cell corresponding to a non-first contention transmission unit using the first resource on the first resource, wherein
the first resource is a resource that is the same as a transmission resource comprised in first unauthorized transmission, the cell corresponding to the first contention transmission unit and a cell corresponding to the second contention transmission unit are different cells, a base station to which the cell corresponding to the first contention transmission unit belongs and a base station to which the cell corresponding to the second contention transmission unit belongs are a same base station or are neighboring base stations, and the cell corresponding to the first contention transmission unit and a cell corresponding to the third contention transmission unit are a same cell.

3. The method according to claim 2, wherein the determining configuration information of a first contention transmission unit comprises:
determining the configuration information of the first contention transmission unit according to at least one of the following principles:
a power level corresponding to the power control information of the first contention transmission unit is negatively correlated with the quality of the uplink channel between the terminal that performs uplink transmission by using the first contention transmission unit and the base station;
a power level corresponding to the power control information of the first contention transmission unit is positively correlated with the quality of the uplink channel between the terminal that performs uplink transmission by using the third contention transmission unit and the base station;
a power level corresponding to the power control information of the first contention transmission unit is negatively correlated with the distance between the terminal that performs uplink transmission by using the first contention transmission unit and the base station;
a power level corresponding to the power control information of the first contention transmission unit is negatively correlated with the distance between the terminal that performs uplink transmission by using the third contention transmission unit and the base station;
a power level corresponding to the power control information of the first contention transmission unit is negatively correlated with the quantity of terminals that perform uplink transmission by using the first contention transmission unit;
a power level corresponding to the power control information of the first contention transmission unit is positively correlated with the quantity of terminals that perform uplink transmission by using the third contention transmission unit;
a power level corresponding to the power control information of the first contention transmission unit is negatively correlated with the uplink neighboring cell load on the first resource;
a power level corresponding to the power control information of the first contention transmission unit is positively correlated with the interference from the neighboring cell to the cell corresponding to the first contention transmission unit on the first resource; or
a power level corresponding to the power control information of the first contention transmission unit is negatively correlated with the interference from the neighboring cell to the cell corresponding to the non-first contention transmission unit using the first resource on the first resource.

4. The method according to any one of claims 1 to 3, wherein the power control information of the first contention transmission unit is used to indicate a power value or a power range used when the terminal sends the uplink data by using the first contention transmission unit.

5. The method according to any one of claims 1 to 4, wherein the power control information comprised in the configuration information of the first contention transmission unit is reconfigured power control information.

6. The method according to any one of claims 1 to 5, wherein the CTU is a transmission resource that comprises a time domain, a frequency domain, a code domain, and a pilot frequency resource form a code domain resource-pilot frequency combination, and pilot frequencies in different code domain resource-pilot frequency combinations are orthogonal to each other; and
the configuration information of the first contention transmission unit further comprises transmission resource information.

7. The method according to any one of claims 1 to 6, wherein the sending the configuration information of the first contention transmission unit to the terminal comprises:
sending the configuration information of the first contention transmission unit to the terminal by using an SIB2 message or an RRC reconfiguration message.

8. The method according to any one of claims 1 to 7, wherein the code domain resource is a Code Division Multiple Access CDMA code group, a sparse code multiple access SCMA codebook, or a low density signature LDS group.

9. The method according to claim 8, wherein the SCMA codebook comprises two or more code words, the code word is a multidimensional complex vector, used to indicate a mapping relationship between data and at least two modulation symbols, and the at least two modulation symbols comprise at least one zero modulation symbol and at least one non-zero modulation symbol.

10. The method according to claim 8, wherein the LDS group comprises at least two signature sequences, the LDS group is used to indicate a mapping relationship between at least two data combinations and the at least two signature sequences, the signature sequence is a multidimensional complex vector, the multidimensional vector comprises at least one zero element and at least one non-zero element, the signature sequence is used to adjust an amplitude and a phase of a modulation symbol, and the modulation symbol is obtained after a constellation mapping is performed on data by using a modulation constellation.

11. The method according to any one of claims 1 to 10, wherein the CTU is an unauthorized transmission resource.

12. A data transmission power control method, comprising:
receiving configuration information of the first contention transmission unit that is sent by a network device, wherein the configuration information of a first contention transmission unit comprises power control information, a contention transmission unit is a transmission resource that comprises at least a time-domain resource, a frequency-domain resource, and a code-domain resource or a transmission resource that comprises at least a time domain, a frequency domain, and a code domain, and the power control information of the first contention transmission unit is used to control power used when a terminal sends uplink data by using the first contention transmission unit;
determining, according to the power control information of the first contention transmission unit, power used when uplink data is sent by using a transmission resource of the first contention transmission unit; and
sending the uplink data on the transmission resource of the first contention transmission unit by using the determined power.

13. The method according to claim 12, wherein
the power control information of the first contention transmission unit is used to indicate a power value used when the terminal sends the uplink data by using the first contention transmission unit; and the determining power used when uplink data is sent by using a transmission resource of the first contention transmission unit comprises: determining that the power value is the power used when the uplink data is sent by using the transmission resource of the first contention transmission unit; or
the power control information of the first contention transmission unit is used to indicate a power range used when the terminal sends the uplink data by using the first contention transmission unit; and the determining power used when uplink data is sent by using a transmission resource of the first contention transmission unit comprises: determining a power value from the power range, and determining that the power value is the power used when the uplink data is sent by using the transmission resource of the first contention transmission unit.

14. The method according to claim 12 or 13, wherein the power control information comprised in the configuration information of the first contention transmission unit is reconfigured power control information.

15. The method according to any one of claims 12 to 14, wherein the CTU is a transmission resource that comprises a time domain, a frequency domain, a code domain, and a pilot frequency, a code domain resource and a pilot frequency resource form a code domain resource-pilot frequency combination, and pilot frequencies in different code domain resource-pilot frequency combinations are orthogonal to each other; and
the configuration information of the first contention transmission unit further comprises transmission resource information.

16. The method according to any one of claims 12 to 15, wherein the receiving configuration information of a first contention transmission unit that is sent by a network device comprises:
receiving the configuration information of the first contention transmission unit that is sent by the network device by using an SIB2 message or an RRC reconfiguration message.

17. The method according to any one of claims 12 to 16, wherein the code domain resource is a Code Division Multiple Access CDMA code group, a sparse code multiple access SCMA codebook, or a low density signature LDS group.

18. The method according to claim 17, wherein the SCMA codebook comprises two or more code words, the code word is a multidimensional complex vector, used to indicate a mapping relationship between data and at least two modulation symbols, and the at least two modulation symbols comprise at least one zero modulation symbol and at least one non-zero modulation symbol.

19. The method according to claim 17, wherein the LDS group comprises at least two signature sequences, the LDS group is used to indicate a mapping relationship between at least two data combinations and the at least two signature sequences, the signature sequence is a multidimensional complex vector, the multidimensional vector comprises at least one zero element and at least one non-zero element, the signature sequence is used to adjust an amplitude and a phase of a modulation symbol, and the modulation symbol is obtained after a constellation mapping is performed on data by using a modulation constellation.

20. The method according to any one of claims 12 to 19, wherein the CTU is an unlicensed transmission resource.

21. A data transmission power control apparatus, comprising:
a determining module, configured to determine configuration information of a first contention transmission unit, wherein the configuration information of a first contention transmission unit comprises power control information, a contention transmission unit is a transmission resource that comprises at least a time-domain resource, a frequency-domain resource, and a code-domain resource or a transmission resource that comprises at least a time domain, a frequency domain, and a code domain, and the power control information of the first contention transmission unit is used to control power used when a terminal sends uplink data by using the first contention transmission unit; and
a sending module, configured to send the configuration information of the first contention transmission unit to the terminal device.

22. The apparatus according to claim 21, wherein the determining module is specifically configured to:
determine the power control information of the first contention transmission unit according to at least one of the following:
quality of an uplink channel between a terminal that performs uplink transmission by using the first contention transmission unit and a base station;
quality of an uplink channel between a terminal that performs uplink transmission by using a third contention transmission unit and a base station;
a distance between a terminal that performs uplink transmission by using the first contention transmission unit and a base station, and a distance between a terminal performs uplink transmission by using a third contention transmission unit and a base station;
a quantity of terminals that perform uplink transmission by using the first contention transmission unit;
a quantity of terminals that perform uplink transmission by using a third contention transmission unit;
an overlapping status between a transmission resource of the first contention transmission unit and a transmission resource of a second contention transmission unit;
uplink neighboring cell load of a first resource; or
interference from a neighboring cell to a cell corresponding to the first contention transmission unit on a first resource, and interference from a neighboring cell to a cell corresponding to a non-first contention transmission unit using the first resource on the first resource, wherein
the first resource is a resource that is the same as a transmission resource comprised in the first unauthorized transmission, the cell corresponding to the first contention transmission unit and a cell corresponding to the second contention transmission unit are different cells, a base station to which the cell corresponding to the first contention transmission unit belongs and a base station to which the cell corresponding to the second contention transmission unit belongs are a same base station or are neighboring base stations, and the cell corresponding to the first contention transmission unit and a cell corresponding to the third contention transmission unit are a same cell.

23. The apparatus according to claim 22, wherein the determining module is specifically configured to:
determine the configuration information of the first contention transmission unit according to at least one of the following principles:
a power level corresponding to the power control information of the first contention transmission unit is negatively correlated with the quality of the uplink channel between the terminal that performs uplink transmission by using the first contention transmission unit and the base station;
a power level corresponding to the power control information of the first contention transmission unit is positively correlated with the quality of the uplink channel between the terminal that performs uplink transmission by using the third contention transmission unit and the base station;
a power level corresponding to the power control information of the first contention transmission unit is negatively correlated with the distance between the terminal that performs uplink transmission by using the first contention transmission unit and the base station;
a power level corresponding to the power control information of the first contention transmission unit is negatively correlated with the distance between the terminal that performs uplink transmission by using the third contention transmission unit and the base station;
a power level corresponding to the power control information of the first contention transmission unit is negatively correlated with the quantity of terminals that perform uplink transmission by using the first contention transmission unit;
a power level corresponding to the power control information of the first contention transmission unit is positively correlated with the quantity of terminals that perform uplink transmission by using the third contention transmission unit;
a power level corresponding to the power control information of the first contention transmission unit is negatively correlated with the uplink neighboring cell load on the first resource;
a power level corresponding to the power control information of the first contention transmission unit is positively correlated with the interference from the neighboring cell to the cell corresponding to the first contention transmission unit on the first resource; or
a power level corresponding to the power control information of the first contention transmission unit is negatively correlated with the interference from the neighboring cell to the cell corresponding to the non-first contention transmission unit using the first resource on the first resource.

24. The apparatus according to any one of claims 21 to 23, wherein the power control information of the first contention transmission unit is used to indicate a power value or a power range used when the terminal sends the uplink data by using the first contention transmission unit.

25. The apparatus according to any one of claims 21 to 24, wherein the power control information comprised in the configuration information of the first contention transmission unit is reconfigured power control information.

26. The apparatus according to any one of claims 21 to 25, wherein the CTU is a transmission resource that comprises a time domain, a frequency domain, a code domain, and a pilot frequency, a code domain resource and a pilot frequency resource form a code domain resource-pilot frequency combination, and pilot frequencies in different code domain resource-pilot frequency combinations are orthogonal to each other; and
the configuration information of the first contention transmission unit further comprises transmission resource information.

27. The apparatus according to any one of claims 21 to 26, wherein the sending module is specifically configured to:
send the configuration information of the first contention transmission unit to the terminal by using an SIB2 message or an RRC reconfiguration message.

28. The apparatus according to any one of claims 21 to 27, wherein the code domain resource is a Code Division Multiple Access CDMA code group, a sparse code multiple access SCMA codebook, or a low density signature LDS group.

29. The apparatus according to claim 28, wherein the SCMA codebook comprises two or more code words, the code word is a multidimensional complex vector, used to indicate a mapping relationship between data and at least two modulation symbols, and the at least two modulation symbols comprise at least one zero modulation symbol and at least one non-zero modulation symbol.

30. The apparatus according to claim 28, wherein the LDS group comprises at least two signature sequences, the LDS group is used to indicate a mapping relationship between at least two data combinations and the at least two signature sequences, the signature sequence is a multidimensional complex vector, the multidimensional vector comprises at least one zero element and at least one non-zero element, the signature sequence is used to adjust an amplitude and a phase of a modulation symbol, and the modulation symbol is obtained after a constellation mapping is performed on data by using a modulation constellation.

31. The apparatus according to any one of claims 21 to 30, wherein the CTU is an unauthorized transmission resource.

32. The apparatus according to any one of claims 21 to 31, wherein the apparatus is a base station.

33. A data transmission power control apparatus, comprising:
a receiving module, configured to receive configuration information of a first contention transmission unit that is sent by a network device, wherein the configuration information of the first contention transmission unit comprises power control information, a contention transmission unit is a transmission resource that comprises at least transmission resources that comprise at least a time-domain resource, a frequency-domain resource, and a code-domain resource or a transmission resource that comprises at least a time domain, a frequency domain, and a code domain, and the power control information of the first contention transmission unit is used to control power used when a terminal sends uplink data by using the first contention transmission unit;
a determining module, configured to determine, according to the power control information of the first contention transmission unit, power used when uplink data is sent by using a transmission resource of the first contention transmission unit; and
a sending module, configured to send the uplink data on the transmission resource of the first contention transmission unit by using the power determined by the determining module.

34. The apparatus according to claim 33, wherein
the power control information of the first contention transmission unit is used to indicate a power value used when the terminal sends the uplink data by using the first contention transmission unit; and the determining module is specifically configured to determine that the power value is the power used when the uplink data is sent by using the transmission resource of the first contention transmission unit; or
the power control information of the first contention transmission unit is used to indicate a power range used when the terminal sends the uplink data by using the first contention transmission unit; and the determining module is specifically configured to: determine a power value from the power range, and determine that the power value is the power used when the uplink data is sent by using the transmission resource of the first contention transmission unit.

35. The apparatus according to claim 33 or 34, wherein the power control information comprised in the configuration information of the first contention transmission unit is reconfigured power control information.

36. The apparatus according to any one of claims 33 to 35, wherein the CTU is a transmission resource that comprises a time domain, a frequency domain, a code domain, and a pilot frequency, a code domain resource and a pilot frequency resource form a code domain resource-pilot frequency combination, and pilot frequencies in different code domain resource-pilot frequency combinations are orthogonal to each other; and
the configuration information of the first contention transmission unit further comprises transmission resource information.

37. The apparatus according to any one of claims 33 to 36, wherein the receiving module is specifically configured to:
receive the configuration information of the first contention transmission unit that is sent by the network device by using an SIB2 message or an RRC reconfiguration message.

38. The apparatus according to any one of claims 33 to 37, wherein the code domain resource is a Code Division Multiple Access CDMA code group, a sparse code multiple access SCMA codebook, or a low density signature LDS group.

39. The apparatus according to claim 38, wherein the SCMA codebook comprises two or more code words, the code word is a multidimensional complex vector, used to indicate a mapping relationship between data and at least two modulation symbols, and the at least two modulation symbols comprise at least one zero modulation symbol and at least one non-zero modulation symbol.

40. The apparatus according to claim 38, wherein the LDS group comprises at least two signature sequences, the LDS group is used to indicate a mapping relationship between at least two data combinations and the at least two signature sequences, the signature sequence is a multidimensional complex vector, the multidimensional vector comprises at least one zero element and at least one non-zero element, the signature sequence is used to adjust an amplitude and a phase of a modulation symbol, and the modulation symbol is obtained after a constellation mapping is performed on data by using a modulation constellation.

41. The apparatus according to any one of claims 33 to 40, wherein the CTU is an unauthorized transmission resource.

42. The apparatus according to any one of claims 33 to 41, wherein the apparatus is a terminal device.

43. A data transmission power control apparatus, comprising a processor, a transmitter, and a memory, wherein the memory is configured to store program code, and the processor is configured to invoke the program code stored in the memory, to perform the following operations:
determining configuration information of a first contention transmission unit, wherein the configuration information of a first contention transmission unit comprises power control information, a contention transmission unit is a transmission resource that comprises at least a time-domain resource, a frequency-domain resource, and a code-domain resource or a transmission resource that comprises at least a time domain, a frequency domain, and a code domain, and the power control information of the first contention transmission unit is used to control power used when a terminal device sends uplink data by using the first contention transmission unit; and
sending the configuration information of the first contention transmission unit to the terminal device by using the transmitter.

44. The apparatus according to claim 43, wherein the processor is configured to invoke the program code stored in the memory, to specifically perform the following operation:
determining the power control information of the first contention transmission unit according to at least one of the following:
quality of an uplink channel between a terminal that performs uplink transmission by using the first contention transmission unit and a base station;
quality of an uplink channel between a terminal that performs uplink transmission by using a third contention transmission unit and a base station;
a distance between a terminal that performs uplink transmission by using the first contention transmission unit and a base station, and a distance between a terminal performs uplink transmission by using a third contention transmission unit and a base station;
a quantity of terminals that perform uplink transmission by using the first contention transmission unit;
a quantity of terminals that perform uplink transmission by using a third contention transmission unit;
an overlapping status between a transmission resource of the first contention transmission unit and a transmission resource of a second contention transmission unit;
uplink neighboring cell load of a first resource; or
interference from a neighboring cell to a cell corresponding to the first contention transmission unit on a first resource, and interference from a neighboring cell to a cell corresponding to a non-first contention transmission unit using the first resource on the first resource, wherein
the first resource is a resource that is the same as a transmission resource comprised in the first unauthorized transmission, the cell corresponding to the first contention transmission unit and a cell corresponding to the second contention transmission unit are different cells, a base station to which the cell corresponding to the first contention transmission unit belongs and a base station to which the cell corresponding to the second contention transmission unit belongs are a same base station or are neighboring base stations, and the cell corresponding to the first contention transmission unit and a cell corresponding to the third contention transmission unit are a same cell.

45. The apparatus according to claim 44, wherein the processor is configured to invoke the program code stored in the memory, to specifically perform the following operation:
determining the configuration information of the first contention transmission unit according to at least one of the following principles:
a power level corresponding to the power control information of the first contention transmission unit is negatively correlated with the quality of the uplink channel between the terminal that performs uplink transmission by using the first contention transmission unit and the base station;
a power level corresponding to the power control information of the first contention transmission unit is positively correlated with the quality of the uplink channel between the terminal that performs uplink transmission by using the third contention transmission unit and the base station;
a power level corresponding to the power control information of the first contention transmission unit is negatively correlated with the distance between the terminal that performs uplink transmission by using the first contention transmission unit and the base station;
a power level corresponding to the power control information of the first contention transmission unit is negatively correlated with the distance between the terminal that performs uplink transmission by using the third contention transmission unit and the base station;
a power level corresponding to the power control information of the first contention transmission unit is negatively correlated with the quantity of terminals that perform uplink transmission by using the first contention transmission unit;
a power level corresponding to the power control information of the first contention transmission unit is positively correlated with the quantity of terminals that perform uplink transmission by using the third contention transmission unit;
a power level corresponding to the power control information of the first contention transmission unit is negatively correlated with the uplink neighboring cell load on the first resource;
a power level corresponding to the power control information of the first contention transmission unit is positively correlated with the interference from the neighboring cell to the cell corresponding to the first contention transmission unit on the first resource; or
a power level corresponding to the power control information of the first contention transmission unit is negatively correlated with the interference from the neighboring cell to the cell corresponding to the non-first contention transmission unit using the first resource on the first resource.

46. The apparatus according to any one of claims 43 to 45, wherein the power control information of the first contention transmission unit is used to indicate a power value or a power range used when the terminal sends the uplink data by using the first contention transmission unit.

47. The apparatus according to any one of claims 43 to 46, wherein the power control information comprised in the configuration information of the first contention transmission unit is reconfigured power control information.

48. The apparatus according to any one of claims 43 to 47, wherein the CTU is a transmission resource that comprises a time domain, a frequency domain, a code domain, and a pilot frequency, a code domain resource and a pilot frequency resource form a code domain resource-pilot frequency combination, and pilot frequencies in different code domain resource-pilot frequency combinations are orthogonal to each other; and
the configuration information of the first contention transmission unit further comprises transmission resource information.

49. The apparatus according to any one of claims 43 to 48, wherein the processor is configured to invoke the program code stored in the memory, to specifically perform the following operation:
sending the configuration information of the first contention transmission unit to the terminal by using the transmitter and by using an SIB2 message or an RRC reconfiguration message.

50. The apparatus according to any one of claims 43 to 49, wherein the code domain resource is a Code Division Multiple Access CDMA code group, a sparse code multiple access SCMA codebook, or a low density signature LDS group.

51. The apparatus according to claim 50, wherein the SCMA codebook comprises two or more code words, the code word is a multidimensional complex vector, used to indicate a mapping relationship between data and at least two modulation symbols, and the at least two modulation symbols comprise at least one zero modulation symbol and at least one non-zero modulation symbol.

52. The apparatus according to claim 50, wherein the LDS group comprises at least two signature sequences, the LDS group is used to indicate a mapping relationship between at least two data combinations and the at least two signature sequences, the signature sequence is a multidimensional complex vector, the multidimensional vector comprises at least one zero element and at least one non-zero element, the signature sequence is used to adjust an amplitude and a phase of a modulation symbol, and the modulation symbol is obtained after a constellation mapping is performed on data by using a modulation constellation.

53. The apparatus according to any one of claims 43 to 52, wherein the CTU is an unauthorized transmission resource.

54. The apparatus according to claim 53, wherein the apparatus is a base station.

55. A data transmission power control apparatus, comprising a processor, a transmitter, a receiver, and a memory, wherein the memory is configured to store program code, and the processor is configured to invoke the program code stored in the memory, to perform the following operations:
receiving, by using the receiver, configuration information of a first contention transmission unit that is sent by a network device, wherein the configuration information of a first contention transmission unit comprises power control information, a contention transmission unit is a transmission resource that comprises at least a time-domain resource, a frequency-domain resource, and a code-domain resource or a transmission resource that comprises at least a time domain, a frequency domain, and a code domain, and the power control information of the first contention transmission unit is used to control power used when a terminal sends uplink data by using the first contention transmission unit;
determining, according to the power control information of the first contention transmission unit, power used when uplink data is sent by using a transmission resource of the first contention transmission unit; and
sending the uplink data on the transmission resource of the first contention transmission unit by using the transmitter and by using the determined power.

56. The apparatus according to claim 55, wherein
the power control information of the first contention transmission unit is used to indicate a power value used when the terminal sends the uplink data by using the first contention transmission unit; and the processor is configured to invoke the program code stored in the memory, to specifically perform the following operation: determining that the power value is the power used when the uplink data is sent by using the transmission resource of the first contention transmission unit; or
the power control information of the first contention transmission unit is used to indicate a power range used when the terminal sends the uplink data by using the first contention transmission unit; and the processor is configured to invoke the program code stored in the memory, to specifically perform the following operations: determining a power value from the power range, and determining that the power value is the power used when the uplink data is sent by using the transmission resource of the first contention transmission unit.

57. The apparatus according to claim 55 or 56, wherein the power control information comprised in the configuration information of the first contention transmission unit is reconfigured power control information.

58. The apparatus according to any one of claims 55 to 57, wherein the CTU is a transmission resource that comprises a time domain, a frequency domain, a code domain, and a pilot frequency, a code domain resource and a pilot frequency resource form a code domain resource-pilot frequency combination, and pilot frequencies in different code domain resource-pilot frequency combinations are orthogonal to each other; and
the configuration information of the first contention transmission unit further comprises transmission resource information.

59. The apparatus according to any one of claims 55 to 58, wherein the processor is configured to invoke the program code stored in the memory, to specifically perform the following operation:
receiving, by using the receiver, the configuration information of the first contention transmission unit that is sent by the network device by using an SIB2 message or an RRC reconfiguration message.

60. The apparatus according to any one of claims 55 to 59, wherein the code domain resource is a Code Division Multiple Access CDMA code group, a sparse code multiple access SCMA codebook, or a low density signature LDS group.

61. The apparatus according to claim 60, wherein the SCMA codebook comprises two or more code words, the code word is a multidimensional complex vector, used to indicate a mapping relationship between data and at least two modulation symbols, and the at least two modulation symbols comprise at least one zero modulation symbol and at least one non-zero modulation symbol.

62. The apparatus according to claim 60, wherein the LDS group comprises at least two signature sequences, the LDS group is used to indicate a mapping relationship between at least two data combinations and the at least two signature sequences, the signature sequence is a multidimensional complex vector, the multidimensional vector comprises at least one zero element and at least one non-zero element, the signature sequence is used to adjust an amplitude and a phase of a modulation symbol, and the modulation symbol is obtained after a constellation mapping is performed on data by using a modulation constellation.

63. The apparatus according to any one of claims 55 to 62, wherein the CTU is an unauthorized transmission resource.

64. The apparatus according to any one of claims 55 to 63, wherein the apparatus is a terminal device.
